(19) Europäisches Patentamt
European Patent Office
Office européen des brevets

(11) **EP 1 081 633 A2**

(12) **EUROPEAN PATENT APPLICATION**

(43) Date of publication:
**07.03.2001 Bulletin 2001/10**

(51) Int. Cl.$^7$: **G06K 11/06**, G02F 1/1335

(21) Application number: **00118800.2**

(22) Date of filing: **30.08.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **31.08.1999 JP 24555299**
**21.10.1999 JP 29969299**

(71) Applicant:
**Daicel Chemical Industries, Ltd.**
**Osaka 590-8501 (JP)**

(72) Inventor: **Hiraishi, Masanori**
**Osaka-shi, Osaka 559-0033 (JP)**

(74) Representative:
**Grünecker, Kinkeldey,**
**Stockmair & Schwanhäusser**
**Anwaltssozietät**
**Maximilianstrasse 58**
**80538 München (DE)**

(54) **Touch panel and display device using the same**

(57) A touch panel is fabricated by arranging a pair of substrates each composed of a transparent conductive layer and a base such that the substrates are spaced apart and the transparent conductive layers face each other. In such touch panel, since the touch panel has at least one of the following features:

(1) at least one of the substrates is light-scatterable; and

(2) a polarized light separation layer capable of transmitting certain circularly polarized light is provided in front of the transparent conductive layer of the substrate for touch input, the visibility of the touch panel and that of an image displayed on a liquid crystal display device using the same is improved.

F I G. 3

**Description**

FIELD OF THE INVENTION

The present invention relates to a touch panel (pressure-sensitive input device), and to a liquid crystal display device in which the front surface (the viewing-side) of the liquid crystal display unit is provided with the touch panel.

BACKGROUND OF THE INVENTION

Liquid crystal display units have broadly been used as displays of such electric appliances as personal computers, word processors, liquid crystal televisions, clocks, and calculators. Since the liquid crystal itself is not luminous, liquid crystal displays other than those of devices of low luminacne (e.g., clocks, calculators) require the use of a backlight for illuminating a liquid crystal display from its reverse side.

Recently, infrastructure provisioning for information communication such the internet, and the networking of information by interconnecting computers and data communication equipment have been progressing. For utilizing such networks efficiently, hand-held terminals such as PDA (Personal Digital Assistance) are under further development. Moreover, thinner and lighter mobile computers as substitutes for notebook computers have been under development.

Since these devices need to be portable, prolongation of battery survival time and downsizing of data communication equipment are both required. Accordingly, displays for these hand-held data communication terminals are also required to be thinner, lighter, and less electric power consuming. Particularly, for making displays less power-consuming, as substitutes for conventional units utilizing a backlight (e.g., transmission-mode liquid crystal display units), there have been proposed units which utilize natural light, exterior light, or an exterior electric light for illuminating their displays. Of these, the most promising type of display is a reflection-type liquid crystal display unit or a reflection-transmission-type liquid crystal display unit. In particular, for keeping up with the diversification of information accompanying advancements in multi-media, there have been desired inexpensive reflection-mode liquid crystal display units or reflection-transmission-mode liquid crystal display units capable of displaying images in color and with extended definition (high-definition display). Incidentally, for cases where sufficient brightness cannot be obtained because of natural light, exterior light, or a front light being feeble, liquid crystal display devices equipped with a front light for temporally (for a short period of time) compensating the insufficiency of brightness were developed. Such front light for temporal use is capable of not only illuminating the display screen of a liquid crystal display device from its side but uniformly scattering the light over the entire screen.

Of the liquid crystal display units, although a variety of units such as those of TN type (twisted nematic type) or of STN type (super twisted nematic type) are known as reflection-mode liquid crystal display units constituting reflection-mode liquid crystal display devices, units of the type that utilize a polarizing plate (a liquid crystal display unit with a single polarizing plate) are advantageous.

Particularly, a liquid crystal display unit of R-OCB mode, which is a display unit having a hybrid aligned nematic (HAN) liquid crystal layer, shows such excellent characteristics as low voltage, broader field of view, high-speed response, medium color tone display, and high contrast. Further, in a liquid crystal display unit of the single polarizing plate type having a base vertically aligned such as to have a certain tilting angle in a predetermined direction [Japanese Patent Application Laid-Open No. 337421/1994 (JP-6-A-337421)], its viewing angle dependency typified by low contrast or reversal of displayed images observed when looked from a diagonal direction is improved.

Moreover, generally known as the reflection-type liquid crystal display units are those of the simple matrix type or of the active matrix type typified by TFT (thin film transistor) liquid crystal display units in which, for presenting finer images, all pigments are individually controlled. Fabrication of a TFT liquid crystal display requires the use of a liquid crystal display unit whose base is made of glass, for it is necessary to provide several hundred thousands or more of transistors on the base. In contrast, a super twisted nematic (STN) liquid crystal display unit can be manufactured at low cost, not only because images are displayed utilizing a simple matrix support (substrate) with bar-like electrodes but also a plastic base can be used as the support for the electrodes.

For making the display brighter, the reflection-type liquid crystal display unit is constructed such that light impinging on a liquid crystal layer (e.g., natural light, exterior light, light from a front light) is efficiently taken thereinto and then reflected by a light-reflective back plate (back electrode) or backside light reflector. Moreover, the surface of the light-reflective back plate (e.g., light reflective back electrode) or that of the backside reflector (a reflector constituted of a support, a back electrode on the support, and a rough-surfaced light reflector laminated on the other side of the support) is roughed such as to be uneven, so that it reflects and scatters the incident light to an extent not impairing the visibility.

In the specification of Japanese Patent Application Laid-Open No. 228887/1988 (JP-A-63-228887)) or at the Photofabrication symposium 1992 held by Japanese Society of Printing Science and Technology, there were presented basic production techniques used in producing reflection-type liquid crystal display units, and a liquid crystal display unit utilizing a surface-roughed thin metal film as a bottom electrode whereby to prevent the occurrence of total internal reflection (mirror reflection) and broaden the field of view of the display surface. However, such surface-roughing requires the utilization of high technologies, raising the production cost.

Incidentally, in Japanese Patent Application Laid-Open No. 177106/1998 (JP-A-10-177106) is recited a mirror reflection-preventing technique comprised of forming a resist film on a reflector, patterning, and deforming the resist to provide specific convexes and concaves on the reflector.

Moreover, proposed as a substitute for the above-described technique of scattering light with a reflective electrode or a reflector is a technique of forming a light-scattering layer within a liquid crystal display unit. For example, as a technique of providing a light-scattering layer on the inner side of a support of a plate electrode, i.e., within a liquid crystal cell, there have been proposed; a process in which a liquid crystal layer is made so as be a dispersed system within which both a liquid crystal and a polymer are dispersed (Japanese Patent Application Laid-Open No. 258624/1994 (JP-A-6-258624); a process in which a transparent resin layer within which particulates are dispersed (light-scattering layer) is provided on the liquid crystal side of a plate electrode (Japanese Patent Application Laid-Open No. 98452/1995 (JP-A-7-98452)); and a process in which a light-scattering layer of a random-aligned liquid crystalline polymer is provided between a support having a transparent electrode and a liquid crystal layer (Japanese Patent Application Laid-Open No. 318926/1995 (JP-A-7-318926)). On the other hand, as a process of forming a light-scattering layer on the outside of a support of a plate electrode. i.e., outside of a liquid crystal cell, there has been proposed a process in which a light-scattering layer within which two or more resins having different refraction indexes are dispersed in a state of phase separation is formed on a polarizing film laminated on the outside of a plate electrode (Japanese Patent Application Laid-Open No. 261171/1995 (JP-A-7-261171).

As the reflection-transmission-type liquid crystal display unit, there is known one with a partly transparent reflecting electrode, and one with a half-mirrored reflecting electrode. These reflection-transmission-type liquid crystal display units are not only capable of reflecting incident light entered through the front surface but also transmittable of, from the back surface to the front surface, light from a backlight attached to the unit. These units are available for both outdoor and indoor uses.

Incidentally, regarding the reflection- or reflection-transmission-type liquid crystal display unit, for cases where natural light, exterior light, or a front light is so feeble that sufficient brightness cannot be obtained, liquid crystal display devices equipped with a front light for temporally (for a short period of time) compensating the insufficiency of brightness were developed. Such front light is not only capable of illuminating the display surface of a liquid crystal display unit from its side but scattering the light over the entire surface uniformly.

As the transmission-type liquid crystal display unit, besides typical TN (twist nematic) display units with two polarizing plates, there have been known, as mentioned when referring to the reflection-type liquid crystal display unit, STN (super twisted nematic) display units and TFT display units. In Japanese Patent Application Laid-Open No. 133810/1997 (JP-A-9-133810) is disclosed a transmission-type liquid crystal display unit in which a circularly polarized light dichroic optical element constituted of a solidified layer of a Grandjean-aligned cholesteric liquid crystal is fixed on the bottom surface of a backlight system.

The front surfaces (image display surface, that is to say, the viewing-side surface) of theses liquid crystal display units (e.g., reflection-type liquid crystal display units, reflection-transmission-type liquid crystal display units) are in many cases provided with a touch panel as an input device. The touch panel is, different from non-transparent input devices such as keyboards, is usually provided on a display unit. Since the touch panel has a position-detecting function (pointing function), it is possible to use entire screen of the touch panel as an assembly of input keys by utilizing a program under which, in combination with icons displayed on the surface of the liquid crystal display, keys are set on the screen of the touch panel. This enables operators to interactively work with computers and input data by directly touching on the display screen or with a pen.

There have been known touch panels of optical type, ultrasonic wave type, electrostatic capacitance type, and of resistant layer type. Of these, in view of adaptability to reflection-type liquid crystal display units and reflection-transmission-type liquid crystal display units, thinner and lighter-weight touch panel of low electric power consumption are advantageous, and those generally employed are touch panels of resistant layer type. Particularly, the reflection-type liquid crystal unit is, for being suitable as a display unit for a hand-held terminal such as a mobile data communication tool for outdoor use, required to be of light-weight and low-power consumption.

As to the touch panels of resistant layer type, there have been known analog touch panels that detect the coordinates of a position by mainly utilizing a potential gradient generated upon application of a voltage to a resistant layer, and digital matrix-type touch panels in which each of a front base on the viewing-side and a back base on the reverse side is provided with a set of electrodes arrayed in stripes, the sets of electrodes of the front and back bases being arranged in orthogonal relation. From the viewpoint of simplicity in structure and uniformity in light transmittance, the reflection- type liquid crystal display unit adopts an analog touch panel.

In the resistant layer-type touch panel, its base is a plate of glass or a film (e.g., a plastic film). When both a front base and a back base are used, combination examples of the materials thereof (material of front base/material of back base) are: film/film, film/glass, and glass/glass. Although the materials of the bases (or plate or support) used in a liquid crystal display are a combination of a film and glass, a combination of films are employed when priority is given to the light -weightness of the panel, and a combination of glass and glass when priority is given to the strength and transparency.

However, when fabricating a touch panel, regardless of being analog or of digital matrix-type, or of its base material combination, it is necessary to form a pair of transparent conductive thin film layers facing each other. So that the interfaces between the transparent conductive layers and air reflect light, the transparency of the touch panel is degraded and the touch panel seems to be yellowish. In addition, light reflected by the touch panel (e.g., light reflected at the surface of the touch panel, light reflected at the interface between a transparent conductive layer and air) lowers the degree of visibility of images down to an insufficient level. For example, the display surface will glare unless the amount of light to be mirror-reflected is reduced, and the sharpness of an image becomes poor (in other words, the image is blurred) as a result of double-or multiple-imaging caused by reflected light that forms the same image as that displayed on the liquid crystal display surface.

In Japanese Patent Application Laid-Open No. 127822/1993 (JP-A-5-127822), in order to improve the visibility, an input-side base of a touch panel is laminated with a phase-contrast plate and a polarizing plate in this order, and the touch panel thus fabricated is mounted on a liquid crystal display unit. In this device, incident light from outside is linearly polarized by the polarizing plate and then converted to circularly-polarized light by the phase-contrast plate. Even if this circularly-polarized light is reflected at the surface of the liquid crystal display unit, the light cannot pass through the polarizing plate, because the phase of the light has been twisted (or deflected) by 90° when linearly polarized by the phase-contrast plate. As a result, the light reflected at the surface of the liquid crystal display unit cannot escape through the surface, and the picture or image quality of the liquid crystal display device is improved. Further. there has been proposed a technique of improving the visibility and the picture quality of the transmission-type liquid crystal display device by, in the case of a device being a combination of a transmission-type liquid crystal display device and a touch panel mounted on the front surface of the liquid crystal display device, providing a sheet laminated with a polarizing plate and a phase-contrast plate on the touch panel. In such device, light enters the touch panel after being circularly polarized, and the light reflected by the touch panel is absorbed by the laminated sheet. As a result, the degree of reflection becomes lower, leading to improved picture or image quality. The technique disclosed by Japanese Patent Application Laid-Open No. 142836/1999 (JP-A-11-142836) is a further evolved version of the above-described technique, in which the visibility of a reflection-type liquid crystal color display unit (unit with a single polarizing plate) is improved by using a specific phase-contrast plate, which is for having circularly polarized light enter a liquid crystal layer, in combination with a polarizing plate. In this technique, however, as the touch panel is repeatedly used, the polarizing plate and the phase-contrast plate get damaged and the picture quality is deteriorated. In addition, the use of a plurality (2 to 3) of phase-contrast plates different in retardation is required for realizing favorable circular polarization over the range of wavelengths of visible radiation. In these devices, the polarizing plate absorbs light reflected by the touch panel and prevents the glare of the display surface, but has drawbacks of impairing the brightness of the display surface and consequently lowering the luminance of the touch panel.

SUMMARY OF THE INVENTION

Thus, an object of the present invention is to provide a touch panel excellent in the visibility of displayed images, and a liquid crystal display device using the touch panel (particularly, a liquid crystal display device comprising a reflection-type liquid crystal display unit or a reflection-transmission-type liquid crystal display unit).

Another object of the present invention is to provide a touch panel capable of improving the brightness of displayed images and sharpness or antidazzle properties, or preventing the double (or multiple)-image formation, and a liquid crystal display device using the touch panel.

Still another object of the present invention is to provide a touch panel the image quality of which is not degraded even if the panel is repeatedly used, and a liquid crystal display device using the touch panel.

Another object of the present invention is to provide a thin liquid crystal display device excellent in visibility.

The inventors of the present invention made intensive studies to achieve the above objects, and found that the visibility of a touch panel can be improved by rendering the touch panel light-scatterable, or providing a polarized light separation layer transmittable of circularly polarized light of certain handedness. The present invention was accomplished based on the above findings.

That is, the touch panel of the present invention is a touch panel comprising a pair of substrates (plates) each composed of, at least, a transparent conductive layer and a base, and the pair of substrates (plates) are arranged such that the substrates (plates) are spaced apart and the transparent conductive layers face each other. The touch panel of the present invention has at least one feature selected from those listed below.

(1) At least one of the substrates (plates) is light-scatterable.

(2) A polarized light separation layer capable of transmitting circularly polarized light of certain handedness is provided in front of the transparent conductive layer of the substrate for touch input (input-side substrate).

The substrate may have a light-scattering layer. The base may solely be constituted of a light-scattering layer, or may be a laminate of a light-scattering layer and a base sheet. The substrate may be laminated with a sheet having a light-scattering layer. Moreover, the light-scattering layer may be provided on the input-side base (the base of the input-side substrate) or polarized light separation layer. The light-scattering layer may be positioned in front of the polarized light separation layer. The light-scatterable (or -scattering) substrate (plates) may be capable of orienting light such that light is scattered at a scattering angle of 3 to 60°. The polarized light separation layer may comprise a cholesteric liquid crystal phase, or it may be a layer capable of selectively reflecting circularly polarized light of wavelength 300 to 900 nm. On an element or member posterior to the polarized light separation layer (e.g., posterior to the transparent conductive layer of the non-input-side base (the base of the opposite substrate)) may be formed a phase-contrast layer. The phase-contrast layer may be a laminate comprised of a layer producing a phase difference of 100 to 200 nm, and a layer producing a phase difference of 200 to 400 nm.

The light-scattering layer comprises at least a resin component, and may comprise a plurality of components having different indexes of refraction. The light-scattering layer may have a phase-separated structure (morphology). The difference in index of refraction between the plurality of components may be about 0.01 to 0.2. The light-scattering layer may have an isotropic bicontinous phase structure. Further, the light-scattering layer may have a particulates-dispersed structure, in which a component in the form of particulates (a resin in the form of particulates, an inorganic substance in the form of particulates) is dispersed in a transparent base resin, the particulates having an index of refraction different from that of the transparent base resin. A layer having the above-mentioned particulates-dispersed structure may be formed by a film forming process using a molten thermoplastic transparent base resin containing the particulate component.

The present invention includes a liquid crystal display device comprised of a liquid crystal display unit and the touch panel mounted on the front surface of the display unit. Incidentally, in the case of the above-mentioned touch panel with a phase contrast- or phase difference-producing layer, the touch panel can be used in combination with a liquid crystal display unit of which the surface is provided with a polarizing plate via a phase-contrast plate.

Incidentally, in the specification of the present invention, the term "substrate (plate)" refers not only to a laminate (lamination) composed of a base and a transparent conductive layer but also to a laminate composed of the base, the transparent conductive layer, and a light-scattering sheet and/or a polarized light separation layer.

BRIEF DESCRIPTION OF THE DRAWINGS

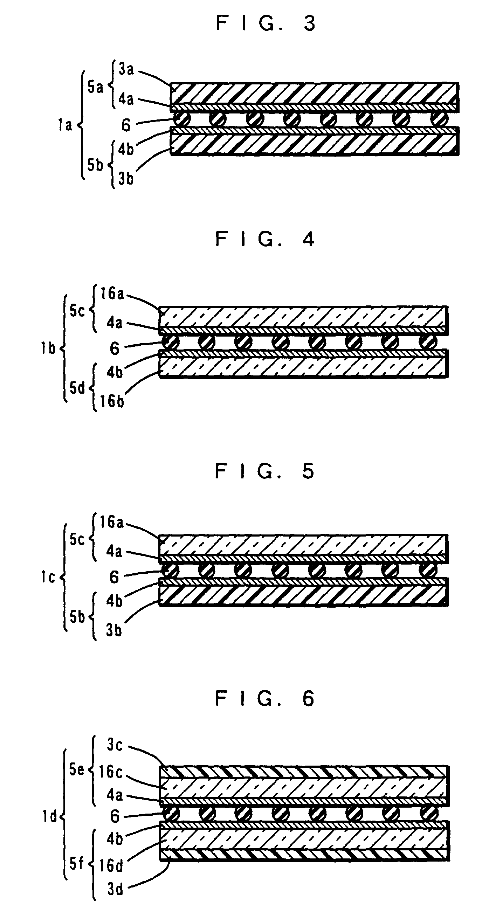

Figures 3, 6, 15, and 16 are schematic sectional views each illustrating one embodiment of the touch panel of the present invention.

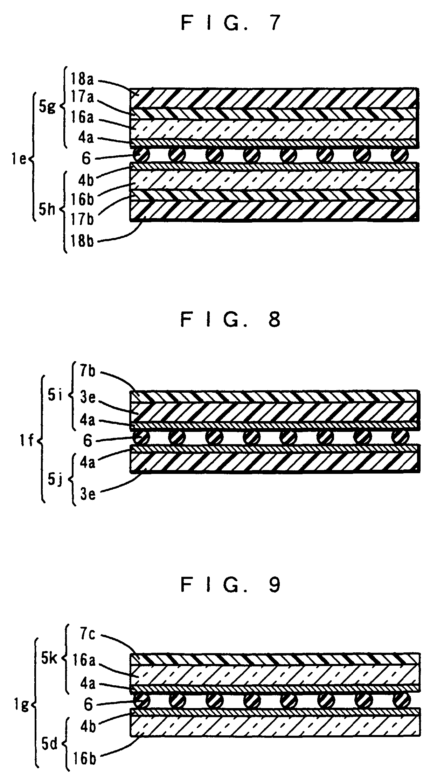

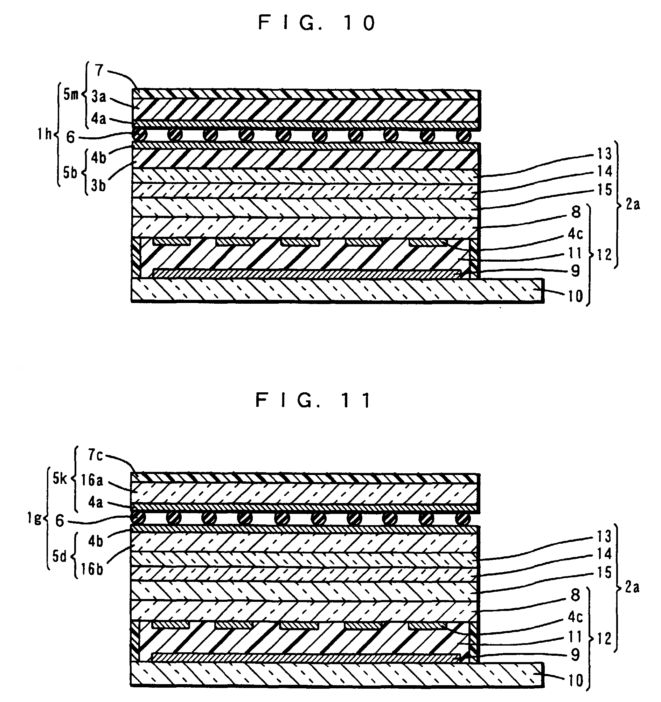

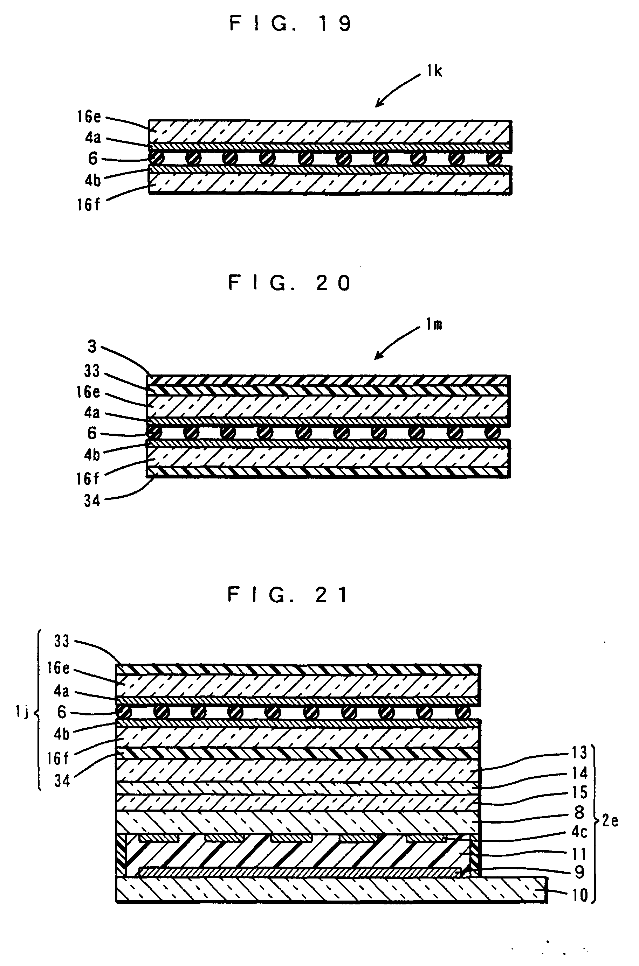

Figure 5 is a schematic sectional view illustrating the touch panel of Example 2. Figure 7 is a schematic sectional view showing the touch panel of Example 4. Figure 8 is a schematic sectional view illustrating the touch panel of Example 5. Figure 20 is a schematic sectional view illustrating the touch panel of Example 10. Figure 4 is schematic sectional view illustrating the touch panel of Comparative Example 1. Figure 9 is a schematic sectional view illustrating the touch panel of Comparative Example 2. Figure 19 is a schematic sectional view illustrating the touch panel of Comparative Example 4.

Figures 2, 17, and 18 are schematic sectional views each illustrating one embodiment of the liquid crystal display device of the present invention.

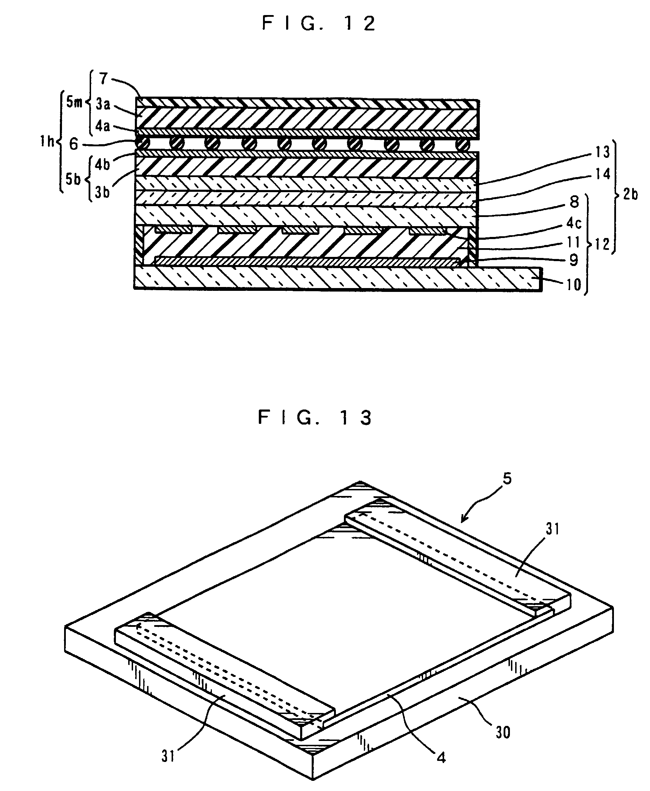

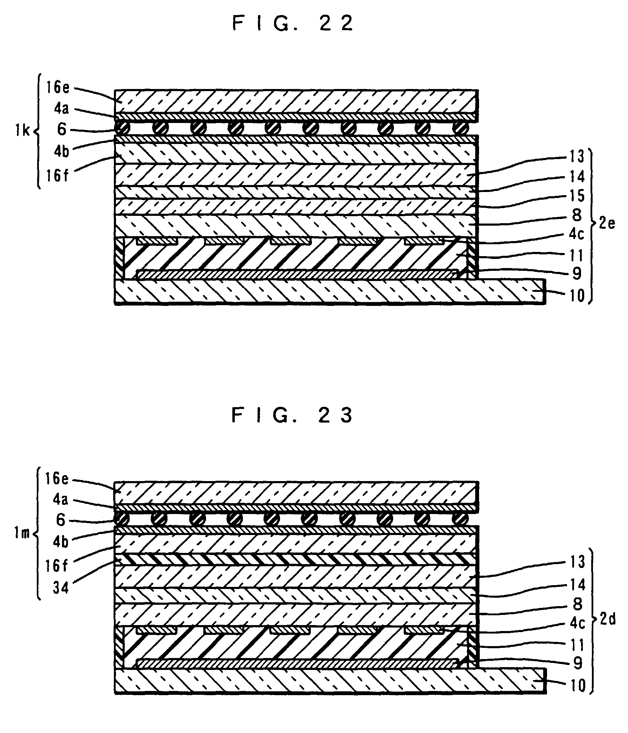

Figure 10 is a schematic sectional view illustrating the liquid crystal display device of Example 6. Figure 12 is a schematic sectional view illustrating the liquid crystal display device of Example 7. Figure 21 is a schematic sectional view illustrating the liquid crystal display device of Example 11. Figure 23 is a schematic sectional view illustrating the liquid crystal display device of Example 12. Figure 11 is a schematic sectional view illustrating the liquid crystal display device of Comparative Example 3. Figure 22 is a schematic sectional view illustrating the liquid crystal display device of Comparative Example 5.

Figure 13 is a schematic perspective view illustrating one embodiment of the substrate. Figure 14 is a schematic perspective view illustrating another embodiment of the substrate. Figure 1 is a schematic sectional view illustrating the directivity of the sheet.

DETAILED DESCRIPTION OF THE INVENTION

[Touch Panel]

The touch panel is fabricated by arranging a pair of substrates each composed of, at least, a transparent conductive layer and a base such that the substrates are spaced apart and the transparent conductive layers face each other (usually, a spacer therebetween). The touch panel has at least one feature selected from those listed below.

(1) At least one of the substrates is light-scatterable.
(2) A polarized light separation layer capable of transmitting circularly polarized light of certain handedness is provided in front of the transparent conductive layer of the input-side substrate for touch input.

With such features, the visibility of the touch panel is remarkably improved. Particularly, a light-scatterable (or -scattering) substrate can prevent the occurrence of mirror reflection, and suitably scatters reflected light. Moreover, in the case of a liquid crystal display device composed of a touch panel provided with a polarized light separation layer (that is, a polarized light separation layer which transmits circularly polarized light of certain handedness and reflects circularly polarized light of the opposite handedness) and a liquid crystal display unit, even if circularly polarized light transmitted through the polarized light separation layer is mirror-reflected at the front surface of the liquid crystal display unit, most of the reflected light is re-reflected at the polarized light separation layer, so that the occurrence of double-imaging is highly prevented. If the transmitted light was reflected at the back surface of the liquid crystal display unit, the reflected light will be converted by the liquid crystal into light capable of passing through the polarized light separation layer to form an image.

Hereinafter, these touch panels will be described in further detail with reference to the attached drawings.

Figures 3 and 6 are schematic sectional views each showing one embodiment of the touch panel of the present invention. These are embodiments of the touch panel having feature (1).

In the embodiment of Figure 3, substrates (5a, 5b) composed of light-scattering layers (3a, 3b) as bases and thin-film layers (4a, 4b) of indium tin oxide (ITO) as transparent conductive layers are arranged such that the thin-film layers 4a and 4b face each other with a spacer 6 therebetween for keeping the substrates spaced apart.

In Figure 6, bases are composed of light-scattering layers (3c, 3d) and base sheets (16c, 16d). Substrates 5e and 5f composed of theses bases and ITO thin-film layers (4a, 4b) as transparent conductive layers are arranged such that the thin-film layers 4a and 4b face each other with a spacer 6 therebetween.

In these touch panels, the front side (input-side) light-scatterable substrate is capable of scattering reflected light efficiently, because, before reaching the back side substrate, light entered the panel through the front surface is inhibited from being mirror-reflected at the interfaces between the transparent conductive layers and a layer of air. Moreover, the back side (non-input side) light-scatterable substrate, when the touch panel is mounted on the liquid crystal display unit that will later be described, scatters light reflected by the display unit.

In an embodiment of the touch panel having feature (2), in the pair of substrates constituting the touch panel (one is an input-side substrate for touch input, and the other is a non-input-side substrate), the input-side substrate is provided with a polarized light separation layer capable of transmitting circularly polarized light of certain handedness such that the polarized light separation layer is located in front of the transparent conductive layer of the input-side substrate. Incidentally, in the case where a polarized light separation layer is provided, the term "substrate" should sometimes be construed as encompassing a substrate comprising the polarized light separation layer.

Such touch panel includes: (A) a touch panel provided with the above-described polarized light separation layer (hereinafter, referred to as a circularly polarized light transmission-type touch panel); (B) a touch panel using a combination of the above-described polarized light separation layer and a phase-contrast layer for converting light from the polarized light separation layer into linearly polarized light (hereinafter, referred to as a linearly polarized light transmission-type touch panel); and others. As will be described below, the circularly polarized light transmission-type touch panel can be used in combination with a liquid crystal display unit provided with either a phase-contrast plate or a polarizing plate (or neither a phase-contrast plate nor a polarizing plate) to constitute a liquid crystal display device. A liquid crystal display unit to be used in combination with the linearly polarized light transmission-type touch panel is not restricted to a display unit of the type provided with either a phase-contrast plate or a polarizing plate (or neither a phase-contrast plate nor a polarizing plate), and any liquid crystal display unit can be used in combination with the touch panel to constitute a liquid crystal display device.

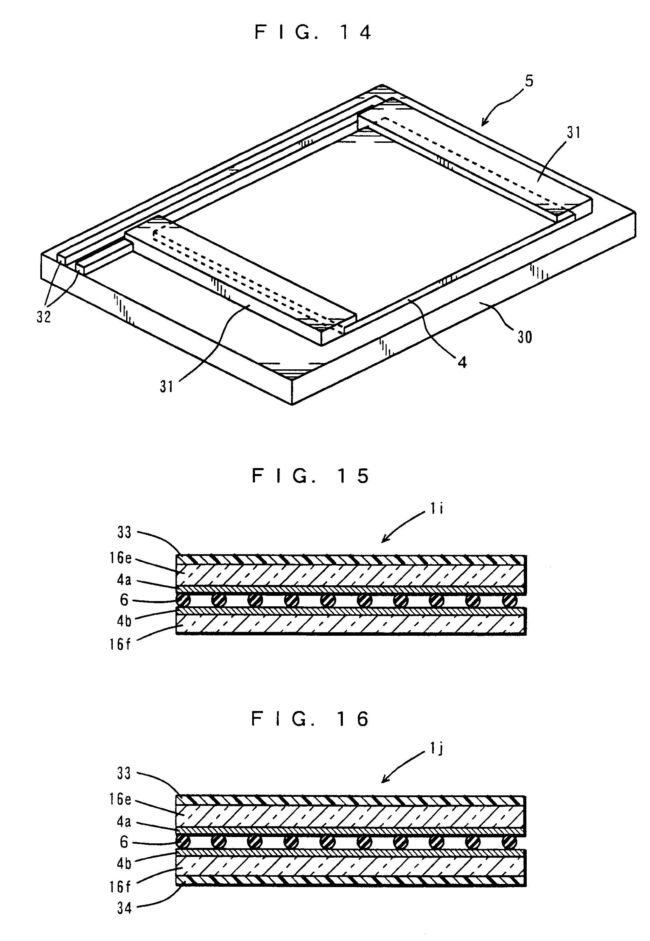

Figure 15 is a schematic sectional view showing one embodiment of the circularly polarized light transmission-type touch panel. In this embodiment, the touch panel is composed of: a plastic base 16e (input-side base); a plastic base 16f (non-input-side base) opposed to and spaced apart from the base 16e; and a spacer 6 for separating these bases. Of the surfaces of the bases 16e and 16f, the surfaces in face-to-face relation are provided with thin film layers 4a and 4b of indium tin oxide (ITO) as transparent conductive layers. The front surface of the input-side plastic base 16e is provided with a polarized light separation layer 33 (e.g., a circularly polarized light dichroic optical element). In this case, it can be said that the input-side substrate is composed of the base 16e, the thin film layer 4a, and the polarized light separation layer 33, and that the non-input-side substrate is composed of the base 16f and the thin film layer 4b.

In such touch panel, of rays of light (natural light) entered through the input-side surface (input screen) of the touch panel, circularly polarized light of a certain handedness (e.g., left circularly polarized light) is reflected at the polarized light separation layer 33, and circularly polarized light of the opposite handedness (e.g., right circularly polarized light) passes through the polarized light separation layer 33. If the circularly polarized light of a certain handedness which selectively passed through the polarized light separation layer was reflected at the interfaces between backward elements (or members) (e.g., the interface between the transparent conductive thin film layer 4a on the input side and air; the interface between the input-side transparent conductive layer 4b and air; the interface between the non-input-side transparent conductive layer 4b and the base 16f), most (or all) of the reflected light will be re-reflected at the polarized light separation layer, for the handedness of the circularly polarized light has been reversed (e.g., to left circularly polarized light) when reflected. Therefore, the reflected light is prevented from escaping through the input screen of the touch panel. and double-imaging or glare is highly prevented. This leads to an improvement of the visibility of the touch panel.

As the circularly polarized light dichroic optical element constituting the polarized light separation layer. for example, a layer having a cholesteric liquid crystal phase and capable of reflecting circularly polarized light of the same handedness as that of the liquid crystal phase may be used. An example of such layer is a layer of a liquid crystal polymer (poly(meth)acrylic acid ester-series polymer) disclosed by Japanese Patent Application Laid-Open No. 133810/1997 (JP-A-9-133810), the liquid crystal polymer layer having a Grandjean-aligned cholesteric liquid crystal phase. Grandjean-aligned cellulose-series cholesteric liquid crystal phases are also exemplified.

By using a combination of liquid crystal polymer layers having different selective reflection wavelengths (e.g., a combination of three layers that selectively reflect rays in red, green and blue regions), the polarized light separation layer can be made so as to be capable of selectively reflecting visible rays (circularly polarized light) covering the whole region (e.g., about 300 to 900 nm).

Figure 16 is a schematic sectional view showing one embodiment of the linearly polarized light transmission-type touch panel. The touch panel is configured by providing the touch panel 1i of Figure 15 with a phase-contrast layer 34 (1/4 wave plate) such that the layer 34 is located posterior to the non-input-side base 16f of the panel 1i. With such phase-contrast layer 34 positioned posterior to the polarized light separation layer 33 (circularly polarized light dichroic optical element), circularly polarized light passed through the polarized light separation layer 33 is converted into linearly polarized light. Therefore, as will later be described, this touch panel can be used in combination with a liquid crystal display unit (e.g., reflection-type liquid crystal display unit) having a polarizing plate on its front surface, constituting a liquid crystal display device with excellent image sharpness and improved visibility as a result of prevention of multiple-imaging and glare.

The phase-contrast layer is not restricted to the 1/4 wave plate, and need only be a layer capable of converting circularly polarized light into linearly polarized light. For example, the phase-contrast layer may be a laminate composed of a layer producing a phase difference of 50 to 200 nm (preferably, 100 to 200 nm) and a layer producing a phase difference of 100 to 500 nm (preferably, 200 to 400 nm). Of these, such a laminate as that described above can convert circularly polarized light of almost all wavelengths into linearly polarized light provided that the light is a visible ray. Preferred as the phase-contrast layer is a laminate composed of a layer producing a phase difference of 100 to 200 nm and a layer producing a phase difference of 200 to 400 nm.

The phase difference (R: retardation) can be determined utilizing the following formula:

$$R = \Delta n \times d$$

wherein $\Delta n$ represents the birefringence of a layer, and d represents the thickness of the layer.

In these touch panels (e.g., circularly polarized light transmission-type touch panel, linearly polarized light transmission-type touch panel), the polarized light separation layer need only be provided in front of the input-side transparent conductive layer 4a. For example, the polarized light separation layer may be positioned between the input-side transparent conductive layer 4a and the base 16e.

Moreover, the phase-contrast layer is provided on an element or member posterior to the non-input-side transparent conductive layer. Providing one of the bases with the polarized light separation layer and the other with the phase-contrast layer makes the fabrication of the touch panel easier. Moreover, the phase-contrast layer can be a substitute for the non-input-side base 16f.

(Light Scattering layer)

In the touch panel of the present invention, at least one of the pair of substrates (plates) constituting the touch panel may be light-scatterable. The substrate may be made light-scatterable by being provided with a light-scattering layer. For example, the base may be a sheet having light-scattering properties (e.g., a sheet solely constituted of a light scattering layer, a light-scattering sheet being a laminate of a light-scattering layer and a base sheet), and on the base may be laminated the light-scattering sheet. The light-scattering layer need only be formed at least one side of the substrate. For example, the light-scattering layer may be laminated on the other surface where no transparent conductive layer as an electrode or a resistant layer is formed. Such light-scattering or -scatterable substrate scatters reflected light, reducing the amount of light to be mirror-reflected. This as a result prevents the occurrence of the dazzle (or glare) of the panel surface caused by mirror-reflected incident light. In addition, so that the light-scatterable (or -scattering) substrate is capable of scattering reflected light at a wide scattering angle, brightness of the panel as a whole is improved.

In the case of the touch panel (2), although there is no need for the polarized light separation layer to be used in combination with the light-scattering sheet, when used in combination with the light-scattering layer, circularly polarized light reflected at the separation layer is suitably scattered by the sheet, so that the visibility is further improved. Also, instead of utilizing the light-scattering sheet, the input screen may be made uneven.

In the case where the polarized light separation layer and the light-scattering sheet are used in combination, the light-scattering layer may be provided on the input screen of the touch panel. For example, the light-scattering sheet may be provided on the input-side base or the polarized light separation layer. It is preferred that the light-scattering sheet is provided in front of the polarized light separation layer. For example, if the polarized light separation layer is formed on the front surface of the input-side base, the light-scattering sheet is positioned in front of the polarized light separation layer, i.e., nearer to the input screen. If the polarized light separation layer is provided on the reverse side of the input-side base, it is possible to provide the light-scattering layer on the front surface of the input-side base or between the input-side base and the polarized light separation layer. In the latter case, as in the case of the touch panel with feature (1), the light-scattering sheet may be provided (laminated) on the input-side base, or the light-scattering sheet itself (a sheet solely consisting of a light-scattering layer, or a laminate composed of a light-scattering layer and a base sheet) may constitute the input-side base.

In the touch panel of the present invention, the light-scattering layer comprises a plurality of components (solid components such as resin component and inorganic component) having different indexes of refraction and usually has a phase-separated structure. So that the light-scattering layer has a phase-separated structure, incident light is prevented from being scattered backward (the direction opposite to the direction in which the incident light travels) (backward scattering), and scattered in the direction of travel (forward scattering)

The difference in index of refraction is not particularly restricted, but at least two of all the components forming a phase-separated structure may be different in index of refraction by about 0.01 to 0.2, preferably by about 0.1 to 0.15.

Exemplified as the resin component are styrenic resins, (meth)acrylic resins, vinyl ester-series resins, vinyl ether-series resins, halogen-containing resins, olefinic resins, polycarbonate-series resins, polyester-series resins, polyamide-series resins, thermoplastic polyurethane resins, polysulfone-series resins [homopolymers of sulfones such as dihalodiphenylsulfone (polyethersulfone), copolymers of the sulfones and aromatic diols such as bisphenol A (e.g., polysulfones)], polyphenylene ether-series resins (e.g., polymers of phenols, such as 2,6-xylenol), cellulose derivatives (e.g., cellulose esters, cellulose carbamates, cellulose ethers), silicone-series resins (e.g., polydimethylsiloxane, polymethylphenylsiloxane), and rubbers or elastomers (e.g., diene-series rubbers such as polybutadiene and polyisoprene, styrene-butadiene copolymer, acrylonitrile-butadiene copolymer, acrylic rubber, urethane rubber, silicone rubber).

Included among the styrenic resins are homo- or copolymers of styrenic monomers (e.g., polystyrene, styrene-$\alpha$-methylstyrene copolymer, styrene-vinyltoluene copolymer), and copolymers of a styrenic monomer and another polymerizable monomer [e.g., (meth)acrylic monomers, maleic anhydride, maleimide-series monomers, dienes). Examples of the styrenic copolymers are styrene-acrylonitrile copolymer (AS resin), copolymers of styrene and a (meth)acrylic monomer [e.g., styrene-methyl methacrylate copolymer, styrene-methyl methacrylate-(meth)acrylic acid ester copolymers, styrene-methyl methacrylate-(meth)acrylic acid copolymers], and styrene-maleic anhydride copolymer. Included among the preferred styrenic resins are polystyrenes, copolymers of styrene and a (meth)acrylic monomer (e.g., copolymers the main components of which are styrene and methyl methacrylate, such as styrene-methyl methacrylate copolymer), AS resin, and styrene-butadiene copolymer.

Exemplified as the (meth)acrylic resins are homo-or copolymers of (meth)acrylic monomers, and copolymers of a (meth)acrylic monomer and copolymerizable monomer. Examples of the (meth)acrylic monomers are $C_{1-10}$alkyl (meth)acrylates such as methyl (meth)acrylate, ethyl (meth)acrylate, butyl (meth)acrylate, t-butyl (meth)acrylate, hexyl (meth)acrylate, and 2-ethylhexyl (meth)acrylate; aryl (meth)acrylates such as phenyl (meth)acrylate; hydroxyalkyl (meth)acrylates such as hydroxyethyl (meth)acrylate and hydroxypropyl (meth)acrylate; glycidyl (meth)acrylates; N,N-dialkylaminoalkyl (meth)acrylates; and (meth)acrylonitrile. Exemplified as the copolymerizable monomers are the above-mentioned styrenic monomers, vinyl ester-series monomers, maleic anhydride, maleic acid, and fumaric acid.

These monomers can be used either singly or in combination.

Exemplified as the (meth)acrylic resins are poly(meth)acrylates such as polymethyl methacrylate; methyl methacrylate-(meth)acrylic acid copolymer; methyl methacrylate-acrylate-(meth)acrylic acid copolymers; methyl methacrylate-(meth)acrylate copolymers; and (meth)acrylic acid ester-styrene copolymers (e.g., MS resin). Included among the preferred (meth) acrylic resins are poly$C_{1-5}$alkyl (meth)acrylates such as polymethyl (meth)acrylate.

Exemplified as the vinyl ester-series resins are homo- or copolymers of vinyl ester-series monomers (e.g., polyvinyl acetate, polyvinyl propionate); and copolymers of a vinyl ester-series monomer and a copolymerizable monomer (e.g., vinyl acetate-vinyl chloride copolymer, vinyl acetate-(meth)acrylic acid ester copolymer) and derivatives thereof. Included among the derivatives of the vinyl ester-series resins are polyvinyl alcohol, ethylene-vinyl alcohol copolymer and polyvinyl acetal resin.

Examples of the vinyl ether-series resins are homo-or copolymers of vinyl $C_{1-10}$alkyl ethers; and copolymers of a vinyl $C_{1-10}$alkyl ether and a copolymerizable monomer (e.g., vinyl alkyl ether-maleic anhydride copolymers).

Exemplified as the halogen-containing resins are polyvinyl chloride, polyvinylidene fluoride, vinyl chloride-vinyl acetate copolymer, vinyl chloride-(meth)acrylate copolymers, and vinylidene chloride-(meth)acrylate copolymers.

Included among the olefinic resins are homopolymers of olefins such as polyethylene and polypropylene; and copolymers such as ethylene-vinyl acetate copolymer, ethylene-(meth)acrylic acid copolymer, and ethylene-(meth)acrylate copolymers.

Included among the polycarbonate-series resins are bisphenol-based (e.g., bisphenol A-based) aromatic polycarbonates; and aliphatic polycarbonates such as diethylene glycol bisallyl carbonate.

Included among the polyester-series resins are aromatic polyesters using aromatic dicarboxylic acids such as terephthalic acid (e.g., homopolyesters of poly$C_{2-4}$alkylene terephthalates (such as polyethylene terephthalate and polybutylene terephthalate) or poly$C_{2-4}$alkylene naphthalates; copolyesters containing a $C_{2-4}$alkylene terephthalate and/or a $C_{2-4}$alkylene naphthalate unit as a main component (e.g., 50% by weight); and aliphatic polyesters using aliphatic dicarboxylic acids such as adipic acid. The polyester-series resins include homo- or copolymers of lactones such as ε-caprolactone.

Exemplified as the polyamide-series resins are aliphatic polyamides such as nylon 46, nylon 6, nylon 66, nylon 610, nylon 612, nylon 11, and nylon 12; and polyamides obtained from dicarboxylic acids (e.g., terephthalic acid, isophthalic acid, adipic acid) and diamines (e.g., hexamethylenediamine, methaxylylenediamine). The polyamide-series resins may be homo- or copolymers of lactam such as ε-caprolactam, and may be copolyamides, not restricted to homopolyamides.

Of the cellulose derivatives, exemplified as the cellulose esters are aliphatic organic acid esters (e.g., cellulose acetates such as cellulose diacetate and cellulose triacetate; $C_{1-6}$ organic acid esters such as cellulose propionate, cellulose butylate, cellulose acetate propionate, and cellulose acetate butylate); aromatic organic acid esters (e.g., $C_{7-12}$ aromatic carboxylic acid esters such as cellulose phthalate and cellulose benzoate); and inorganic acid esters (e.g., cellulose phosphate, cellulose sulfate). Esters of mixed acids, such as esters of acetic acid/nitric acid and cellulose, can also be used. Included among the cellulose derivatives are cellulose carbamates (e.g., cellulose phenyl carbamate) and cellulose ethers (e.g., cyanoethylcellulose; hydroxy-$C_{2-4}$alkylcelluloses such as hydroxyethylcellulose and hydroxypropylcellulose; $C_{1-6}$alkylcelluloses such as methylcellulose and ethylcellulose; carboxymethylcellulose and salts thereof, benzylcellulose, and acetylalkylcellulose).

As the inorganic component, a transparent or semi-transparent inorganic component can be used, examples of which are silicon oxides (e.g., glass, particularly no-alkali glass); inoragnic oxides such as zirconium oxide, aluiminium oxide, zinc oxide, and mica; inorganic nitrides such as boron nitride; and inorganic halides such as calcium fluoride and magnesium fluoride. The inorganic component may be a composite material being a combination of two or more. For example, use can be made of a composite material of mica and boron nitride.

The light-scattering layer comprises at least the resin component. For example, the light-scattering layer may be comprised of a plurality of resin components, or of one or a plurality of resin components and an inorganic component.

The phase-separated structure of the light-scattering layer may be an isotropic bicontinuous phase structure or a particulates-dispersed structure. The brightness of the touch panel surface is improved over a wide range of field of view by forming a light-scattering layer having a bicontinuous phase structure or a specific particulates-dispersed structure, for such light-scattering layer gives directivity to reflected light. Incidentally, the bicontinuous phase structure is sometimes referred to as "bicontinuous structure" or "a three-dimensionally continuous or connected structure", and usually means that a plurality of resin components (not limited to two components) constitute the structure and the phases of these constitutive polymers are individually continuous. So that the degree of anisotropy within the sheet is reduced, the bicontinuous phase structure of the light-scattering layer is practically isotropic, in other words, the size (average phase or domain distance) of each continuous phase forming the phase-separated structure is, even if measured in any direction within the sheet, approximately the same. In the specification, the term "bicontinuous phase structure" also means an intermediate structure being a coexistent state of a bicontinuous phase structure and a drop phase structure (independent or isolated-phase structure).

The bicontinuous phase structure is not only capable of giving higher light-scattering properties to the light-scattering layer but raising (e.g., maximizing) the intensity of light to be scattered at certain angles, so that high directivity is given to the scattered light. Therefore, in the case of the fabrication of a reflection-type liquid crystal display device or a reflection-transmission-type liquid crystal display device using a touch panel having this light-scattering layer, it is possible to efficiently utilize such a light source as exterior light or a front light by adjusting the desired characteristics related to the field of view and the angle of directivity of scattered light.

In the case of the light-scattering layer having a bicontinuous phase structure, included among the preferred resins are styrenic resins, (meth)acrylic resins, vinyl ether-series resins, halogen-containing resins, polycarbonate-series resins, polyester-series resins, polyamide-series resins, cellulose derivatives, silicone-series resins, and rubber or elastomers.

Of these resins, in order to form a bicontinuous phase structure, there is used a combination of polymers which exhibit both compatibility and incompatibility (phase separation) at or above their glass transition temperatures. For example, use can be made of: a combination of polymers which is a coexistent system of high temperature phase-separated type (lower critical solution temperature; LCST-type), the polymers being compatible with each other at low temperatures but incompatible at high temperatures; or a combination of polymers which is a coexistent system of low temperature phase-separated type (upper critical solution temperature; UCST-type), the polymers being incompatible with each other at low temperatures but compatible at high temperatures. The bicontinuous phase structure can be formed by suitably adjusting the phase-separated structure of a resin composition (e.g., a resin composition in the form of a sheet) of the UCST or LCST type through spinodal decomposition.

When the combination of polymer is a combination of a first polymer and a second polymer, the species thereof are not particularly restricted. For example, when the first polymers is a styrenic resin (e.g., polystyrenes, styrene-acrylonitrile copolymer), the second polymer may be a polycarbonate-series resin, a (meth)acrylic resin, a vinyl ether-series resin, a rubber, or an elastomer.

The ratio of the first polymer to the second polymer is, for example, about 10/90 to 90/10 (weight ratio), preferably about 20/80 to 80/20 (weight ratio), more preferably about 30/70 to 70/30 (weight ratio), and particularly about 40/60 to 60/40 (weight ratio). When the polymers are in an extremely ill-balanced ratio, upon the formation of a bicontinuous phase by spinodal decomposition, one of the polymer phases is liable to be non-continuous. This leads to a failure in giving directivity to scattered light.

The average phase (domain) distance of the bicontinuous phase is, for example, about 1 to 20 μm, preferably about 2 to 15 μm, and more preferably about 2 to 10 μm.

Incidentally, the phase distance (the distance between the same phase) is measured by the image processing of a photomicrograph (e.g., a cofocal laser microscope). Moreover, it is also possible to obtain the phase distance "d" by, in the same manner as the manner of evaluating the directivity of scattered light which will later be described, measuring the scattering angle θ at which the intensity of scattered light becomes maximum, and utilizing the following formula of Bragg reflection conditions:

$$2d \cdot \sin(\theta/2) = \lambda$$

wherein "d" represents the phase distance, θ represents the scattering angle, and λ represents the wavelength of light.

The thickness of the light-scattering layer having a bicontinuous phase is, for example, about 1 to 100 μm, preferably about 1 to 50 μm, and more preferably about 1 to 30 μm.

On the other hand, the light-scattering layer having a particulates-dispersed structure comprises a transparent base resin and a particulate component (a resin in the form of particulates, an inorganic substance in the form of particulates) dispersed in the transparent base resin, the index of refraction of the particulate component being different from that of the transparent base resin.

Examples of the resins that form the preferred transparent base resin and the particulate component are styrenic resins (e.g., polystyrenes), (meth)acrylic resins, olefinic resins (e.g., polyethylene, polypropylene), polycarbonate-series resins, polyester-series resins, polysulfone-series resins, polyamide-series resins (e.g., nylon 6, nylon 12, nylon 612) and cellulose derivatives (e.g., cellulose acetate). In many cases, thermoplastic resins are used for forming the transparent base resin and the resin particulates (particularly, transparent base resin).

The inorganic particulates can be made of any of the aforementioned inorganic components.

In the case of the light-scattering layer having a particulates-dispersed structure, although the layer is highly light-scatterable, its light-scattering properties are in some cases degraded as the scattering angle becomes broader. That is, since the distribution of scattered light is similar to the Gaussian distribution, as the scattering angle becomes broader, the intensity of scattered light as a whole sometimes decreases. This may result in deterioration in brightness of the display surface. Therefore, the difference in index of refraction between the transparent base resin and the particulate component (e.g., resin particulates, inorganic particulates), the particle size of the particulate component, the ratio, the proportion of the particulates relative to the base resin (particle density), or others may suitably be adjusted to inhibit the back scattering and, consequently, give directivity to scattered light.

When giving directivity to scattered light, the difference in index of refraction between the particulate component and the transparent base resin is, for example, about 0. 01 to 0.06, preferably about 0.01 to 0.05, and more preferably about 0.01 to 0.04.

The mean particle size of the particulate component may for example be about 0.1 to 100 $\mu$m, and preferably 1 to 20 $\mu$m.

The ratio of the particulate component to the transparent base resin is, for example, about 10/90 to 90/10 (weight ratio), preferably about 15/85 to 60/40 (weight ratio), and more preferably about 15/85 to 40/60 (weight ratio).

The average particle density (the proportion of the particulates relative to the base resin) of the particulate component may for example be about 1 to 100 ($10^{10}$ particulates/cm$^3$), and preferably about 4 to 80 ($10^{10}$ particulates/cm$^3$).

The average particle density (the proportion of the particulates relative to the base resin) can be calculated by measuring the mean particle size and utilizing the following formula (I):

$$\text{Average particle density (the number of particulates/cm}^3) = 1\ \text{cm}^3 \times Vs/[(4/3)\pi\ (Ds \times 10^{-4}/2)^3] \tag{I}$$

wherein Vs represents the proportion of the particulate component in the light-scattering layer (volume basis), $\pi$ denotes the pie, and Ds represents the mean particle size ($\mu$m) of the particulate component.

The thickness of the light-scattering layer having a particulates-dispersed structure is, for example, about 1 to 400 $\mu$m, preferably about 10 to 300 $\mu$m, and more preferably about 50 to 200 $\mu$m.

In the case of the light-scattering layer having a bicontinuous phase structure, the base is in many cases composed of a light-scattering layer and a base sheet. In this case, even if the light-scattering layer is thin, lamination of the light-scattering layer on the base sheet gives suitable strength to the base. In the case of the light-scattering layer having a particulates-dispersed structure, the base is in many cases solely constituted of a light-scattering layer.

When constituting the base using a light-scattering sheet, for example, the base solely constituted of a light-scattering layer can be obtained by shaping the composition (particularly, the resin composition) of the light-scattering layer into a sheet. Moreover, the base composed of a base sheet and a light scattering layer can be obtained by laminating the base sheet with the above-mentioned composition by coating or other means.

In further detail, when the light-scattering layer has a bicontinuous phase structure, the base can be formed by shaping a resin composition composed of a plurality of resins different in index of refraction into a sheet, subjecting the sheet to spinodal decomposition, and fixing the isotropic phase-separated structure thus induced. Moreover, the base can also be formed by coating or melt-laminating the surface of a base sheet with the above-mentioned resin composition, and subjecting the laminated sheet, after being dried if necessary, to spinodal decomposition.

The spinodal decomposition can be effected by heating the resin composition layer (or sheet) to phase separation, the temperature for spinodal decomposition being not lower than the glass transition temperatures of the polymers and LCST but not higher than UCST (e.g., about 80 to 380°C, preferably about 140 to 300 °C). In the spinodal decomposition, as the phase separation proceeds, due to the action of surface tension, the polymer phases begin to form a bicontinuous phase structure. With further application of heat, the continuous phases become non-continuous by the action of their own surface tensions, forming a drop phase structure (e.g., an islands-in-the-sea structure containing independent phases in ball-like or spherical shape). Therefore, a phase structure in a transitional state from the bicontinuous phase to the drop phase (i.e., intermediate structure of the bicontinuous phase structure and the drop phase structure) can also be formed by varying the degree of phase separation.

The isotropic bicontinuous phase structure (or the intermediate structure of a bicontinuous phase structure and a drop structure) of the sheet (base) thus formed through spinodal decomposition can be fixed by cooling the sheet at or below the glass transition temperatures of the constitutive polymers (for example, at or below the glass transition temperature of the main polymer).

Moreover, in the case of the light-scattering layer having a particulates-dispersed structure, the base can be formed by dispersing the particulate component within the transparent base resin which is in a molten state, and then forming the mixture of the transparent resin and the particulate component into a film (or sheet) in accordance with such a conventional film forming method as casting or melt-extrusion. Also, the base can be formed by coating the mixture of the transparent base resin and the particulate component on the surface of a base sheet.

When laminating the base or the polarized light separation layer with the light-scattering sheet, the sheet may be adhered thereto, or the resin composition of the light-scattering layer may be applied on the base or the polarized light separation layer by such a film forming method as coating or an extrusion lamination method to constitute a laminate (sheet). Particularly, in the case of lamination with the light-scattering layer in accordance with the film forming method using melting state which will later be described, as compared to the lamination by adhesion, the light-scattering layer as a layer of a substrate is more tightly joined to the other layers constituting the substrate (plate). This as a result prevents the quality of images from deteriorating when the touch panel and a liquid crystal display unit are used in combination.

In the case of lamination by adhesion, the light-scattering sheet may be adhered to the base or the polarized light separation layer by applying an adhesive onto part (e.g., periphery) or the entire surface of the base or that of the polarized light separation layer. Incidentally, the total light transmittance of the lamination is maintained higher in the case where the adhesive is applied over the entire surface than in the case where the adhesive is partially applied. Moreover, in the case of partial application, the generation of interference fringes is inhibited in a conventional manner, e.g., by dispersing particulates over the surface of the base.

The adhesive can be selected from acrylic resins, silicone-series polymers, polyester, polyurethane, rubbers, and others. Included among the preferred adhesives are those having an index of reflection being a value between the index of refraction of the resin forming a polarizing plate and that of the resin forming the substrate or base (e.g., transparent base resin) as members of the liquid crystal display device which will later be described.

Concrete examples of the acrylic adhesives are homo-or copolymers of (meth)acrylic acid $C_{2-14}$alkyl esters (e.g., ethyl ester, n-propyl ester, isopropyl ester). (Base)

If the base in itself is light-unscatterable, it is possible to adopt a plastic or glass as the material of the base. Preferred as the base is a plastic base. It is made possible to fabricate a lighter-weight and thinner touch panel by using a plastic base. As the resin for the base, a resin similar to that of the light-scattering layer can be used. In the case where a light-scattering layer having a bicontinuous phase structure and a base sheet are used in combination, since the bicontinuous phase structure is formed by spinodal decomposition, it is preferred that the base sheet is heat-resistant at a spinodal decomposition temperature.

Included among the preferred resins for the plastic base are resins excellent in heat resistance and transparency, such as cellulose derivatives [e.g., cellulose acetates such as cellulose triacetate (TAC)], polyester-series resins [e.g., polyethylene terephthalate (PET), polybutylene terephthalate (PBT)], polyarylate-series resins, polysulfone-series resins [e.g., polysulfones, polyethersulfone (PES)]. polycarbonates-series resins [e.g., polycarbonates (PC)], polyolefinic resins, and polycyclicolefinic resins. The base may be a uniaxially or biaxially stretched sheet, and may be a stretched polyester sheet, such as a uniaxially or biaxially stretched PET sheet.

In the case where the base is a laminate composed of a light-scattering layer and a base sheet, a sheet similar to the plastic base can be used.

Especially, when provided with a polarized light separation layer, although it does not matter if the base is one with a phase difference (e.g., a uniaxially stretched PET sheet, a sheet formed by the following film forming method using melting state), the use of a base having a low index of birefringence is preferable. Exemplified as such base is a sheet having a phase difference of 50 nm or lower, preferably 30 nm or lower. A base having such a low phase difference can be obtained by using, as the resin, polyethersulfone (PES) or cellulose triacetate (TAC), or others.

The thickness of the base or base sheet is about 1 to 400 μm (e.g.. 1 to 300 μm), preferably about 10 to 300 μm, and more preferably about 50 to 200 μm. If the base or base sheet is too thin, its strength becomes low. If the base or base sheet is too thick, the pressure sensitivity (e.g., responsiveness) upon input through the touch panel surface is degraded.

When the base or base sheet is laminated with a light-scattering sheet, the thickness of the base or base sheet may be similar to or smaller than the values mentioned above. In this case, the thickness of the base or base sheet may be about 1 to 300 μm, preferably about 20 to 150 μm.

(Transparent Conductive Layer)

A plate (substrate) is made by forming a transparent conductive layer on the base comprising a light-scattering sheet, or on the light non-scattering base. As the transparent conductive layer, use can be made of a layer of a conductive inorganic compound, such as a layer of a metal oxide [e.g., a layer of ITO (indium tin oxide), $InO_2$, $SnO_2$, or of ZnO), and a layer of a metal (e.g., a layer of Au, Ag, Pt, or of ZnO). Preferred as the transparent conductive layer is an ITO layer.

Electrodes or resistant layers of the touch panel can constituted of such transparent conductive layers. In order to eliminate static electricity, another transparent conductive layer as a static electricity eliminating layer (antistatic layer) may optionally be provided not on the base surface facing the other substrate but on the other surface of the base. For example, in the case where transparent conductive layers are provided one on each side of the substrate, one of which can be used as an electrode or a resistant layer, and the other as a static electricity eliminating layer.

The thickness of the transparent conductive layer capable of functioning as an electrode or a resistant layer is, for example, $100 \times 10^{-8}$cm to $2,000 \times 10^{-8}$cm, preferably about $100 \times 10^{-8}$ to $1,500 \times 10^{-8}$cm, and more preferably about $150 \times 10^{-8}$ to $1,000 \times 10^{-8}$. The surface resistivity of this transparent conductive layer is, for example, about 10 to 1,000 Ω/□ (e.g., 50 to 800 Ω/□), preferably about 15 to 500 Ω/□ (e.g., 100 to 500 Ω/□), and more preferably about 20 to 300 Ω/□.

The thickness of the transparent conductive layer capable of serving as a static electricity eliminating layer is about $10 \times 10^{-8}$ to 500 to $10^{-8}$cm, and preferably about $30 \times 10^{-8}$ to $300 \times 10^{-8}$cm. The surface resistivity of this transparent conductive layer is, for example, about 0.5 to 100 kΩ/□, preferably about 1 to 50 kΩ/□.

The surface resistivity can be measured using a four-probe specific resistivity measuring device (manufactured by Kokusai Denki, K.K.).

Concretely, in the substrate, the transparent conductive layer is laminated on at least one side of the base. When the base is a laminate of a light-scattering layer and a base sheet, the transparent conductive layer is provided on the light-scattering layer side or the base sheet side, and either will do. If the transparent conductive layer is provided on the base sheet-side surface (good in thermal resistance) of the base, the reliability (stability) of the touch panel production process is improved. In this case, since the substrate has a three-layered structure laminated in the order of transparent conductive layer - base sheet - light-scattering layer, when used as the back base of a touch panel, the back base is placed with its transparent conductive layer to the front and the light-scattering layer to the rear. Therefore, when the touch panel is mounted on the front surface of a liquid crystal display unit, the light-scattering layer lies in contiguity with the liquid crystal. This gives the display surface or screen higher image quality.

The transparent conductive layer can be formed on the base by such a conventional method as sputtering, vapor deposition, ion plating, or coating. In the case where the transparent conductive layer is formed by vapor deposition (e.g., in the case of deposition of ITO), in many cases, the surface of the base is previously provided with an anchor coat layer by depositing a non-conductive inorganic compound such as $SiO_2$, or by coating a thermosetting or UV-curable resin, and then the transparent conductive layer is deposited thereon. Such pretreatment improves the strength or durability of the transparent conductive layer.

The thickness of the substrate can be selected within the range of, for example, about 1 to 500 μm, preferably about 10 to 400 μm, and more preferably about 50 to 200 μm. If the thickness exceeds 500 μm, the sharpness of a displayed image is deteriorated (blurred image). Moreover, if the thickness is less than 1 μm, the strength or handling easiness of the substrate deteriorates or becomes worse.

The substrate is highly light-scatterable in the forward direction. That is, despite its high haze value, the substrate has a high total light transmittance and a low reflectance. The haze value of the substrate is about, for example, 10 to 60%, preferably about 15 to 50%, and more preferably about 20 to 40%. The total light transmittance is, for example, about 80 to 100%, preferably about 85 to 98%, and more preferably about 90 to 95%. The reflectance is, for example, 10% or lower (e.g., about 0 to 10%), preferably about 7% or lower (e.g., 1 to 7%), and more preferably about 1 to 5%.

The haze value and the total light transmittance can be measured, in conformity with JIS K 7105, using a haze meter (manufactured by Nippon Denshoku Kogyo Co. LTD., NDH-300A). The reflectance can be figured out by, using a visible/ultraviolet ray spectrophotometer (manufactured by Hitachi, Ltd.) with a 60 φ integrating sphere inside and a sample piece placed on the incidence plane to be measured, irradiating the sample piece with a ray of 550 nm and measuring the coefficient of diffuse reflection (the coefficient of reflected light, not including light which perpendicularly impinged on the surface (zero incidence) and was mirror-reflected).

Moreover, the substrate, when its light-scattering layer is in a certain phase-separated state, can give directivity to scattered light. For example, the substrate may be one capable of directionally scattering light at a scattering angle of about 3 to 60°, preferably about 5 to 50°, and more preferably about 10 to 40° (particularly, about 10 to 30°).

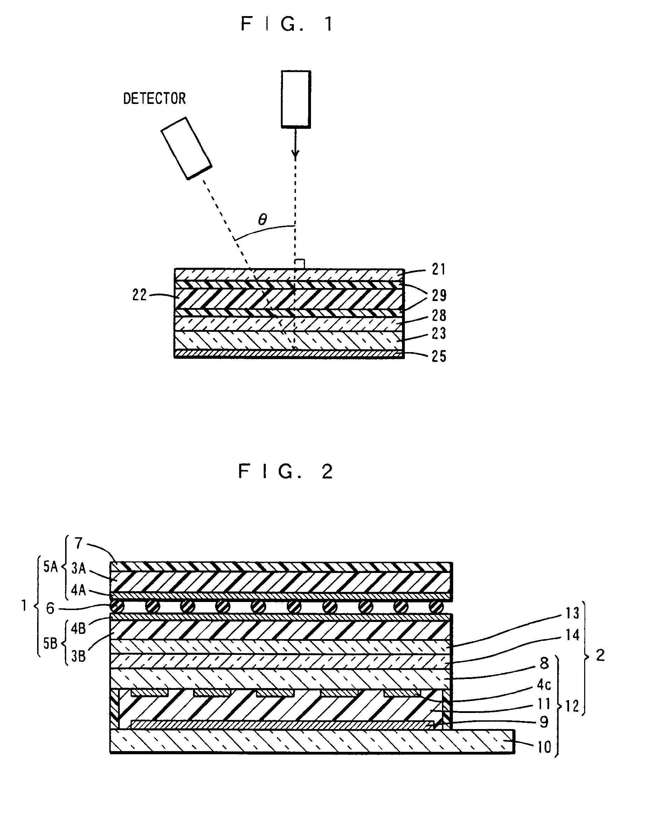

The directivity of the scattered light can be measured using, as shown in Figure 1, a reflcetion-type LCD model device being a laminate of a polarizing plate 21, a vinyl acetate-series adhesive 29, a testing sheet 22, a color filter 28, a glass plate 23 (1mm thick), and an aluminium reflector 25. A laser beam (from laser, Nippon Kagaku Engineering, K.K., NEO-20MS) is directly and perpendicularly shot toward the reflection-type LCD model device, and then the intensity of light scattered by the sheet (intensity of scattering) is plotted against the scattering angle θ. If the sheet has directivity, the curve obtained by plotting will show a maximum or a shoulder (particularly, a maximum) within a specific range of scattering angle θ (excluding 0°)

Incidentally, in the substrate, a base composed of a light-scattering layer and a base sheet, or of a light-unscatterable base may have a thermal expansion coefficient similar to that of a polarizing plate or a phase-contrast plate (particularly, a polarizing plate) as a member of the liquid crystal display unit which will later be described. Since the substrate is in many cases laminated on a polarizing plate or phase-contrast plate of a liquid crystal display unit, adjustment of the thermal expansion coefficient of the base to a value almost equivalent to the thermal expansion coefficient of the polarizing plate or that of the phase-contrast plate inhibits detachment stresses from being induced between the substrate and the polarizing plate or between the substrate and the phase-contrast plate by thermal expansion or thermal shrinkage. For example, when the polarizing plate or the phase-contrast plate is made of a cellulose derivative, it is preferred that a cellulose derivative (e.g., cellulose acetate) is used as the resin for the light-scattering layer (e.g., transparent base resin) or as the material of the base sheet.

The plate may incorporate a variety of additives, such as a stabilizer (e.g., an antioxidant, an ultraviolet ray absorber, a heat stabilizer), a plasticizer, a coloring agent (e.g., a dye or pigment), a flame retardant, an antistatic agent, or a surfactant. If necessary, a surface of the substrate (particularly, the other side of the substrate in which which no transparent conductive layer is formed) may be provided with a variety of coat layers, such as an anticlouding layer or a mold-releasing layer.

As the spacer for insulating the opposed transparent conductive layers from each other, for example, a spacer in the form of particles (dot spacers) can be used. The dot spacers are dispersed between the transparent conductive layers. When the operator touches on the panel for input of data, in response to the pressure applied, the conductive layers are switched from the non-conducting state into the conducting state at the position corresponding to the touched area, and as a result the input position is detected. The spacer, such as dot spacers, can be arranged between the transparent conductive layers by such a conventional method as printing or a particulates dispersing method.

Although it does not matter if the mean particle size of the dot spacers is about 0.2 mm (e.g., about 0.01 to 0.3 mm), for realizing smoother hand-input operation, the mean particle size may for example be about 0.1 mm or smaller (e.g., about 0.01 to 0.1 mm), preferably about 0.03mm (e.g., about 0.01 to 0.05 mm).

The touch panel of the present invention can for example be used as a touch panel of the digital matrix-type or analog resistant layer-type. According to the type of the touch panel, the transparent conductive layers thereof may suitably be processed or treated. In the case of a touch panel of the digital matrix type, each of the transparent conductive layers is processed so as to have a striped pattern (a set of bar-like electrodes), and the resultant patterned electrode (bars-like electrode) of one substrate (e.g., input-side substrate) and that of the other (e.g., non-input-side substrate) may be arranged so as to be in crossed relation (particularly, crossed at nearly a right angle). So that the conducting wires are connected to the bar-like electrodes with a silver paste, when the panel is touched, only the bar-like electrode corresponding to the touch position (input position) carries electricity and the touch position is detected. Patterning of the transparent conductive layers can be effected according to a resist-forming method, such as photolithography, or by etching the layers.

In the case of a touch panel of the analog resistant layer type, both ends of each transparent conductive layer may be removed by, e.g., patterning, and replaced with busbars (e.g., silver busbars) to be connected to each transparent conductive layer. Then, the substrates may be so arranged that an array of busbars of one substrate (e.g., input-side substrate) and that of the other substrate (non-input-side substrate) are in crossed relation (particularly, crossed at a nearly right angle (for example, one oriented in the X-axial direction, the other in the Y-axial direction). When a voltage is applied to the pair of busbars on one substrate to produce a potential gradient (e.g., potential gradient in the X-axial direction) in its transparent conductive layer, a touch (input) on the panel causes electricity to flow through the other transparent conductive layer, and thus the touch position (X-coordinate) is detected. The two-dimensional coordinates (e.g.. X-coordinate, Y-coordinate) of the pressed area (input area) are detected by alternation of voltage application (for producing a potential gradient) to one set of busbars (e.g., busbars oriented in the X-axial direction) and detection of potential by the other set of busbars (e.g., busbars oriented in the Y-axial direction). The busbars can be formed by, for example, printing a silver past on the substrates and then baking.

Figure 13 shows one embodiment of the substrate with such busbars. A base 30 is laminated with a transparent conductive layer 4, the layer 4 being approximately square. The periphery of the transparent conductive layer is removed by patterning and replaced by a pair of busbars 31 formed by printing and baking a silver paste, the busbars being arranged so as to be opposite to each other. The busbars 31 are so formed that their side edges and the transparent conductive layer 4 overlap.

On the substrate may be provided a conducting wire for conducting electricity to the busbars. Figure 14 illustrates such substrate. On a base 30 is formed a nearly rectangular transparent conductive layer 4 with its periphery removed by patterning. As in the case of the touch panel shown in Figure 13, at edges of the transparent conductive layer 4 are formed a pair of busbars 31 by printing. In the area surrounding the transparent conductive layer 4, a silver paste is printed along an edge where no busbar is formed, and then baked thereby to form a pair of conducting wires 32 individually connected to the busbars.

On the input screen of the touch panel may be formed a scratch-resistant layer (hard layer). The hard layer protects a member provided on the input screen of the touch panel (e.g., polarized light separation layer, light-scattering layer, static electricity eliminating layer, base) and prevents the member from being damaged by fingers or pens upon input, improving the durability of the touch panel.

As the hard layer, there is exemplified a resin layer formed by hardening a curable monomer or resin (e.g., a light-cured resin layer of a (meth)acrylate-series monomer, such as silicone acrylate, epoxy acrylate, acrylic acid ester, or urethane acrylate; a thermoset or light-cured resin layer of a light- or thermosetting resin). Incidentally, it is possible to make the touch panel antidazzle by forming a light-scattering hard layer by dispersing a light-scatterable component (e.g., a particulate $SiO_2$-series material, such as siloide) in the above mentioned resin layer. In this case, although the light-scattering hard layer scatters reflected light and prevents the occurrence of mirror reflection, the definition of images displayed on a liquid crystal display device is degraded, for the degree of backscattering is high and consequently the transmittance decreases. Particularly, Since a touch panel having a light-scatterable substrate has already been provided with a forward light-scatterable layer with a low degree of backward scattering, the hard layer to be formed is in many cases a cured or hardened resin layer of a curable monomer or resin. The touch panel thus obtained is excellent in light transmittance, light-scattering properties, and durability.

[Liquid Crystal Display Device]

The above-mentioned touch panel in combination with a liquid crystal display panel constitutes a touch panel-equipped liquid crystal display. In the liquid crystal display device, the touch panel is usually mounted on the front surface of the liquid crystal display unit.

Figure 2 is a schematic sectional view showing a liquid crystal display device using one embodiment of the touch panel of the present invention. The liquid crystal display device of Figure 2 comprises a liquid crystal display unit 2 and a touch panel 1 placed in front of the unit 2 (liquid crystal display surface-side).

In the touch panel 1 of Figure 2, a pair of substrates 5A and 5B, each composed of a light-scattering layer 3A (or 3B) as a base and a transparent conductive layer 4A (or 4B) provided on one side of the base, are arranged such that the transparent conductive layers 4A and 4B face each other. A spacer 6 present between the substrates insulates the transparent conductive layers 4A and 4B from each other. In the touch panel 1, on the front surface of the front-side substrate 5A is formed a hard layer 7.

In the liquid crystal display unit 2 used in combination with the touch panel 1, a front base 8 on which a transparent conductive layer (transparent conductive electrode) 4c is formed, and a back base 10 on which a light-reflective conductive layer (light-reflective electrode) 9 is formed are so arranged that the conductive layers (electrodes) 4c and 9 face each other. The unit 2 has, between the bases 8 and 10, a liquid crystal cell 12 in which a liquid crystal 11 is confined. On the surface of the front base 8, not the surface provided with the conductive layer but the other one, is provided a polarizing plate 13 via a phase-contrast plate 14. That is, this liquid crystal display unit is a reflection-type liquid crystal display unit having a back base laminated with a light-reflective layer, and an image formed by the liquid crystal layer 11, through the front base 8 and the phase-contrast plate 14, is observable from the polarizing plate 13 side. Since the liquid crystal display unit is capable of effectively utilizing incident light entered through the front surface (e.g., natural light, exterior light, front light), there is no need for the display unit to be illuminated by a backlight from behind.

Even if placed on the front surface (image display surface) of the liquid crystal display unit, the touch panel of the present invention (touch panel having a light-scattering substrate) does not make the liquid crystal display surface seem to be yellowish, for the light-transmittance of the touch panel is high. Moreover, since the touch panel is capable of preventing the occurrence of mirror-reflection at the touch panel surface and therefore is highly light-scatterable, it is possible to provide a liquid crystal display device featuring high luminance, antidazzle properties, and high visibility. Further, since the touch panel of the present invention is light-scatterable, the touch panel can be used in combination with a mirror-reflective liquid crystal display unit having no light-scattering plate, and a liquid crystal display device constituted of such combination is thinner but still holding its high visibility.

A variety of touch panels (touch panels having a light-scattering substrate) are exemplified as the touch panel to be used in combination with the liquid crystal display unit, such as a touch panel both of the front and back substrates of which are light-scatterable, and a touch panel in which either the front-side substrate or the back-side substrate is light-scatterable. Incidentally, when the light-scattering layer lies in contiguity with the liquid crystal display unit, like the case where the light-scattering layer is formed on the back-side base of the touch panel or where the light-scattering sheet is laminated on the surface of the back-side base (particularly, the surface on the liquid crystal display unit side), an image is displayed with higher quality.

A circularly polarized light transmission-type touch panel having a polarized light separation layer is put to good use when used in combination with a liquid crystal display unit having either a polarizing plate or a phase-contrast plate (or neither a polarizing plate nor a phase-contrast plate) (hereinafter, referred to as a liquid crystal display unit of the circularly polarized light-using type). Moreover, a linearly polarized light transmission-type touch panel having both a polarized light separation layer and a phase-contrast layer can be used in combination with, besides the above-described liquid crystal display unit of the circularly polarized light-using type, a liquid crystal display unit in which a polarizing plate or a phase-contrast plate is provided in front of the liquid crystal layer.

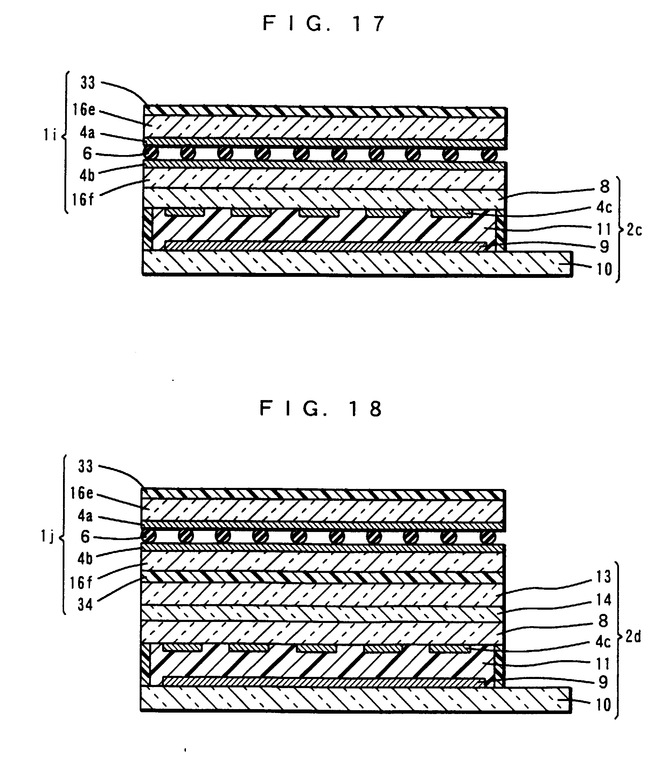

Figure 17 is a schematic sectional view showing a liquid crystal display device constituted of a circularly polarized light transmission-type touch panel and a liquid crystal display unit of the circularly polarized light-using type. That is, in this liquid crystal display device, the touch panel 1i of Figure 15 is mounted on the front surface of a liquid crystal display unit 2c. This liquid crystal display unit 2c is of the reflection type, comprising a front base 8 provided with a transparent conductive layer (transparent conductive electrode) 4c, and a back base 10 provided with a light-reflective conductive layer (light-reflective electrode) 9, the front base 8 and the back base 10 being so arranged that the conductive layers (electrodes) 4c and 9 are in face-to-face relation. In a space between the bases 8 and 10 is confined a liquid crystal 11. The direction of alignment (director) of the liquid crystal 11 is reversibly controllable by applying a voltage thereto [for example, in a direction nearly perpendicular (the direction of thickness of the liquid crystal layer) or parallel to the liquid crystal layer], and the liquid crystal 11 can function also as a 1/4 wave plate. For example, the liquid crystal 11 may be a liquid crystal which is aligned in a nearly parallel direction (e.g., helical orientation) upon application of a voltage and functions as a 1/4 wave plate but stands aligned in a nearly vertical direction unless a voltage is applied thereto. Incidentally, to the contrary, the liquid crystal 11 may be a liquid crystal which is aligned in a nearly vertical direction upon application of a voltage but stands aligned in a nearly parallel direction unless a voltage is applied thereto.

In such liquid crystal display device, exterior light (e.g., natural light) entered through the input screen of the touch panel 1i is separated by a polarized light separation layer 33, and only circularly polarized light of certain handedness exits the touch panel through the non-input-side surface (non-input screen) of the touch panel 1i and then enters the liquid crystal display unit 2c. The circularly polarized light entered the liquid crystal display unit 2c passes through the liquid crystal layer 11, is reflected by the reflective electrode 9, passes through the liquid crystal layer 11 again, exits the liquid crystal display unit 2c through its front surface, and enters the touch panel 1i. When no voltage is applied and the liquid crystal 11 is in a vertically aligned state, as in the case of ordinary interfacial reflection, circularly polarized light cannot pass through the polarized light separation layer 33, for the circularly polarized light is not affected by the liquid crystal layer 11. As a result, the display surface looks black. On the other hand, if a voltage is applied and the liquid crystal 11 is aligned parallel to the liquid crystal layer (e.g., helical orientation), due to the phase differences in the liquid crystal layer 11, circularly polarized light which entered the display unit through the touch panel 1i will be converted to linearly polarized light when exiting the display unit as reflected light. Therefore, the reflected light can pass through the polarized light separation layer 33 of the touch panel 1i, making the display surface look white.

In such liquid crystal display device, so that the liquid crystal layer 11 functions as a phase-contrast layer and therefore there is no need for the liquid crystal display unit 2c to be equipped with a polarizing plate nor a phase-contrast plate, it is possible to fabricate a thinner device. Moreover, in a liquid crystal display device being an integrated combination of an ordinary reflection-type liquid crystal display unit (a liquid crystal display unit having a polarizing plate and a phase-contrast plate) and a touch panel, the amount of light entered the touch panel through its input screen is cut in approximately half by the polarizing plate of the liquid crystal display unit and, before entering a liquid crystal layer, the light that passed through the polarizing plate is partly reflected and exits the touch panel through the input screen. As a result, the transmittance of incident light for the liquid crystal layer decreases. In contrast, in the liquid crystal display device of the present invention, there is no fear that circularly polarized light that passed through the polarized light separation layer is reflected and exits through the input screen, and almost all the incident light passes through the liquid crystal layer, illuminating the liquid crystal display surface bright.

Figure 18 is a schematic sectional view showing a liquid crystal display device constituted of a linearly polarized light transmission-type touch panel and a liquid crystal display unit having a polarizing plate and a phase-contrast plate. This liquid crystal display device is constituted of a liquid crystal display unit 2d and the touch panel 1j of Figure 16, the front surface of the unit 2d being laminated with a phase-contrast plate 14 and a polarizing plate 13 in this order The touch panel 1j is placed on the front surface of the liquid crystal display unit 2d. The axis of polarization of the polarizing plate 13 of the liquid crystal display unit 2d is oriented in the same direction as that of the axis of linearly polarized light entered through the non-input-side surface of the touch panel 1j. Since the touch panel and the liquid crystal display unit are arranged thus, linearly polarized light from the touch panel 1j can pass through the polarizing plate of the liquid crystal display unit 2d, and it is possible to constitute a liquid crystal display device without hindering the functions (functions of displaying an image) of a general-purpose reflection-type liquid crystal display unit incorporated therein.

In such liquid crystal display device, if necessary, the touch panel or the liquid crystal display unit may be provided with a light-scattering layer. For example, a touch panel having, in addition to a polarized light separation layer and a phase-contrast layer, the light-scattering layer may be used, or the liquid crystal display unit may be provided with the light-scattering layer. In an ordinary reflection-type liquid crystal display unit, the display unit is made light-scatterable by such a complicated means as forming concaves and convexes of specific shape on a reflection electrode. However, provision of the above-described light-scattering layer is an easier way of giving light-scattering properties to a liquid crystal display device.

The reflection-type liquid crystal display unit is not limited to one with the above structure, and common reflection-type liquid crystal display units can also be used. Moreover, the electrode to be laminated on the back base need not necessarily be light-reflective, and may be a transparent electrode. Even if a transparent electrode is used, light-reflectivity can be given to the back base by laminating the back base with a light-reflective plate (e.g., a metal plate such as aluminium foil). Incidentally, although it does not matter if the light-scattering properties of the light-reflective layer of the liquid crystal display unit (e.g., light-reflective base, light-reflective plate) are those given by surface-roughening, if the touch panel is a light-scatterable one (having a light-scattering layer), its light-reflective layer is usually not roughed and is mirror-reflective. According to the present invention, it is possible to make a liquid crystal display device light-scatterable without roughening a light-reflective layer of its liquid crystal display unit and therefore to provide high quality images at low cost.

As the liquid crystal display unit, in addition to the above-described reflection-type liquid crystal display unit, there can be used another type of a display unit, such as a reflection-transmission-type liquid crystal display unit, a transmission-type liquid crystal display unit, and others. Since the reflection-transmission-type liquid crystal display unit is as excellent in portability as the reflection-type liquid crystal display unit, it is suitable for use in combination with the touch panel of the present invention. The reflection-transmission-type liquid crystal display unit can be fabricated by, for example, making part of the light-reflective electrode of a reflection-type liquid crystal display unit transparent or half-mirrored. In such reflection-transmission-type liquid crystal display unit, incident light from the front surface (e.g., exterior light) is reflected by a light-reflective electrode or a half-mirrored electrode. On the other hand, light from the reverse side (e.g., light from a backlight) passes through the transparent or half-mirrored electrode to the front surface. In the case where the touch panel is of the linearly polarized light transmission type, a transmission-type liquid crystal display unit may be used.

The liquid crystal display unit to be used in combination with the touch panel of the present invention may be of the simple matrix (passive) type (e.g., STN) or the active matrix type (e.g., TN-TFT). The liquid crystal display unit may be one with two polarizing plates having different light polarizing properties or one with a single polarizing plate. The single polarizing plate-type liquid crystal display unit may for example be one with a single polarizing plate combined with any of a variety of modes (e.g., twisted nematic liquid crystal mode, optically compensated bend mode (R-OCB), homogeneous (planar) alignment mode).

As the liquid crystal, a nematic liquid crystal which shows negative dielectric anisotropy (n-type) can be used. Such liquid crystal is available from Merck Japan Ltd. under the trade name "ZLI-2857", "ZLI-4750", "ZLI-4788", or "ZLI-478-000". The thickness of the liquid crystal layer may for example be about 1 to 20 $\mu$m, preferably about 3 to 12 $\mu$m.

When aligning the molecules, an alignment film for aligning the molecules of the liquid crystal (e.g., for aligning the molecules such as to be perpendicular to the base) may be formed on each of the electrodes of the liquid crystal display unit by coating, or other means. Used as the alignment film is in many cases a polyimide-series alignment film (e.g., homeotropic alignment film).

Of the conductive layers of the liquid crystal display unit, the transparent conductive layer may be the same as that of the touch panel (e.g.. ITO (indium tin oxide)).

The material of the base of the liquid crystal display unit is not particularly restricted, examples of which are glass and plastics. Preferred as the base is a plastic base. The plastic base makes possible a lighter-weight and thinner liquid crystal display device.

In the case of the glass base, the thickness of the base is, for example, about 0.1 to 3 mm, preferably about 0.1 to 1 mm. Moreover, in the case of the plastic base, the thickness is, for example, about 1 to 1,000 $\mu$m, preferably about 100 to 800 $\mu$m.

In the liquid crystal display unit, the polarizing plate and the phase-contrast plate are not necessarily required. Even if required, the number of polarizing plates or phase-contrast plates are not particularly limited. Moreover, insofar as the polarizing plate or the phase-contrast plate is placed in front of the liquid crystal layer, there is no particular restriction as to where they are to be positioned. Further, in this case, if necessary, the liquid crystal display unit may be laminated with a light-scattering plate for giving light-scattering properties to the unit (e.g., a light-scattering plate made with the above-described light-scattering sheet), a means for displaying images in color (e.g., color filters such as three primary color filter), or others.

For illuminating the input screen of the touch panel, the liquid crystal display device may be provided with, at a suitable position, a light source for illuminating the front surface of the liquid crystal display device (e.g., a front light). Concretely, the front light may be provided between the liquid crystal display unit and the touch panel, on the front surface of the touch panel (particularly, between the liquid crystal display unit and the touch panel), or the side of the touch panel or the liquid crystal display unit. Even when exterior light is so weak that brightness is unsatisfactory (e.g., in cases the visibility of the display is low), such front light illuminates the input screen of the touch panel from the front or the side, and is capable of uniformly scattering light over the entire surface of the input screen. For example, a front light capable of illuminating the interface of the liquid crystal display unit and the touch panel makes the liquid crystal display surface brighter, for light given off by the front light directly enters the liquid crystal display unit without being transmitted through the touch panel.

In the case where the liquid crystal display unit is of the transmission-type or the reflection-transmission-type (particularly, reflection-transmission-type), the unit may be provided with a backlight for illuminating the display surface from behind (from the rear side).

Included among the preferred liquid crystal display units are TFT color liquid crystal display units with a single polarizing plate (e.g., a reflection-type liquid crystal display unit, a reflection-transmission-type liquid crystal display unit with a backlight), and STN reflection-type color liquid crystal display units which may be equipped with a front light.

The liquid crystal display device can be obtained by mounting the touch panel on the front surface (the surface where images are displayed) of the liquid crystal display unit. The touch panel and the liquid crystal display unit are combined into one by, for example, forming an adhesive layer (e.g., a layer of an adhesive) on the surface to paste up of the liquid crystal display unit or that of the touch panel, by providing an adhesive layer (e.g., adhesive tape) along the margin of the liquid crystal display unit or that of the touch panel, or by placing the touch panel on the liquid crystal display unit and then holding (fastening) the two using a faster or others. In combining the two by adhesion at the margin or with a fastener, formation of an air layer between the liquid crystal display unit and the touch panel leading to the generation of interference fringes should be prevented. Incidentally, the liquid crystal display unit is not necessarily fabricated by gluing a liquid crystal display unit to a touch panel that were separately made, and the device may be fabricated by suitably gluing the members of the display unit and the panel. For example, the liquid crystal display device may be fabricated by adhering one side of a phase-contrast plate both sides of which are provided with adhesive layers by coating or other means to the touch panel and the other side to the liquid crystal display unit.

The touch panel or the liquid crystal display device equipped with the touch panel of the present invention has largely improved visibility, for the touch panel comprises a substrate having light-scattering properties or a polarized light separation layer. Particularly, a touch panel having a light-scatterable substrate is not only capable of reducing the degree of mirror-reflection of incident light but also improving the antidazzle properties of the image display surface. In addition, since such touch panel is capable of scattering reflected light, an image is displayed with high luminance. Combined with such touch panel to constitute a liquid crystal display device, the visibility of an images displayed on the liquid crystal display unit is improved. Further, in the case of a touch panel having a polarized light separation layer, the polarized light separation layer is positioned in front of an input-side transparent conductive layer of the touch panel, so that light reflected at the interface between the transparent conductive layer and air is re-reflected by the polarized light separation layer and prevented from exiting through the input screen. This leads to a higher transmittance of incident light, prevention of multiple-imaging caused by mirror reflection, and consequently brighter images. When fabricating a liquid crystal display device being an integrated combination of the above touch panel and a liquid crystal display, the liquid crystal display unit to be used need not be one equipped with a phase-contrast plate and a polarizing plate, for the polarized light separation layer of the touch panel functions not only as a phase-contrast plate but as a polarizing plate. Thus, it is made possible to fabricate a thinner liquid crystal display device.

EXAMPLES

The following examples are intended to show the present invention in further detail and should by no means be construed as defining the scope of the invention.

Incidentally, the properties of the light-scattering sheets and touch panels obtained in Examples 1 to 7 and Comparative Examples 1 to 3 were measured according to the following procedure.

(1) Total light transmittance:

The total light transmittance was measured using a haze meter (manufactured by Nippon Denshoku Kogyo Co. LTD., NDH-300A) in accordance with JIS K7105.

(2) Haze value:

The haze value was measured using a haze meter (manufactured by Nippon Denshoku Kogyo Co. LTD., NDH-300A) in accordance with JIS K7105.

(3) Reflectance

The coefficient of diffuse reflection (the coefficient of reflected light, not including light which perpendicularly impinged on the surface (zero incidence) and was mirror-reflected) was measured by, using a visible/ultraviolet ray spectrophotometer (manufactured by Hitachi, Ltd.) with a 60 $\phi$ integrating sphere inside and a sample piece placed on the incidence plane to be measured, irradiating the sample piece with a ray of 550 nm.

(4) Surface resistivity

The surface resistivity was measured using a four-probe specific resistivity measuring device (manufactured by Kokusai Denki. K.K.).

(5) Scratch resistance (hardness)

The scratch resistance was evaluated utilizing a key-stroke life test. That is, a sheet was struck by a mechanical key-stroke apparatus at a rate of 3 times/sec. Attached to the tip of the key was a ball of urethane (hardness: 7) of 20 mm diameter, and the load applied by a key-stroke was about 150 g. In the test, it is also possible to measure the switching behavior of the touch panel at the time of strike. After struck a million times, whether the sheet got scratched or not was visually examined.

Example 1

The touch panel shown in Figure 3 was fabricated as follows.

In 900 parts by weight of a mixed solvent of methylene chloride/methanol (9/1 (weight ratio)) was dissolved 80 parts by weight of flaky cellulose triacetate (Daicel Chemical Industries, Ltd., LT-105). The solution was mixed with 20 parts by weight of polymethyl methacrylate (PMMA)-series particulates (Sekisui Plastics Co. Ltd., MBX-2), and a light-scatterable base (a light-scattering layer 3a) was formed by flow-casting the mixture and then drying (thickness of sheet: 150 μm, total light transmittance: 92%, Haze value: 30%, Reflectance: 3%).

A substrate 5a was obtained by forming an ITO transparent conductive layer 4a (thickness: 0.045 μm) on one side of the base by sputtering. The surface resistivity of the transparent conductive layer 4a was 100 Ω/□, and the total light transmittance of the substrate 5a was 92%. The haze value of the substrate 5a was 30%.

By a resist forming method and etching, the transparent conductive layer was patterned to remove its periphery and make the layer approximately rectangular. On the surface of the base from which the transparent conductive layer had been removed, a silver paste was printed along two opposing edges of the rectangular transparent conductive layer such that each printed silver paste and the transparent conductive layer overlap, and then baked to form busbars. In addition, along an edge where the busbar is not formed, on the surface of the base from which the transparent conductive layer had been removed was formed conducting wires by printing the silver paste and baking (Figure 14). A resistant layer-type analog touch panel 1a was fabricated by arranging the patterned two substrates (5a, 5b) such that the transparent conductive layers (4a, 4b) was in face-to-face relation with a dot spacer 6 therebetween. The substrates were arranged such that the pair of busbars of the substrate 5a and that of the substrate 5b were in orthogonal relation.

In order to produce a potential gradient of 0 to 5 volts, a voltage of 5 volts was alternately applied to the two resistant layers (4a, 4b) via the busbars each for a period of time allocated. The surface of the touch panel was pressed with a finger or a pen, and the coordinates of the pressed position were determined by detecting the potential gradient at the pressed position of the voltage-applied resistant layer, and converting the detected potential gradient from analog to digital via the other resistant layer. The coordinates of the pressed position was accurately determined.

The touch panel 1a was examined under a fluorescent lamp, and it was found that the amount of mirror-reflected light was reduced. Moreover, the touch panel 1a was mounted on an image forming surface, and an image displayed on the image forming surface was examined. The sharpness (less blurred image), contrast, and the definition of the image were as good as they had been and nothing was degraded.

Comparative Example 1

The touch panel 1b shown in Figure 4 was fabricated as follows.

A plate 5a (total light transmittance: 92%, Haze value: 0.5%, reflectance: 5%) was fabricated by forming, as in Example 1, an ITO transparent conductive layer 4a (thickness: 0.045 μm) on one side of a transparent biaxially-stretched polyethylene terephthalate sheet (thickness: 175 μm) as a base sheet 16a.

Using the substrate thus made, a resistant layer-type analog touch panel 1b was fabricated in the same manner as in Example 1.

The touch panel 1b thus fabricated was mounted on an image forming surface, and an images displayed on the image forming surface was examined through the panel 1c under a fluorescent lamp. Light from the fluorescent lamp was mirror-reflected, so that the surface of the touch panel dazzled (with glare) and the visibility of the image was insufficient.

Example 2

Except that a pair of substrates constituting the touch panel 1c shown in Figure 5 was the combination of the substrate 5b of Example 1 and the substrate 5c of Comparative Example 1, the touch panel was fabricated in the same manner as in Example 1.

With the substrate 5c of Comparative Example 1 to the front (as front base) and the substrate 5b of Example 1 to the back (as back base), the visibility of the touch panel was examined. That is, the touch panel 1c was illuminated from the front base 5c side with a fluorescent lamp and, as in Example 1, the visibility of the surface of the front base was examined. As in the case of the touch panel of Example 1, the degree of mirror-reflection was low and the touch panel had high image visibility (sharpness, contrast, and definition of images).

Example 3

The touch panel 1d shown in Figure 6 was fabricated as follows.

In a mixed solvent of methylene chloride and methanol were dissolved 50 parts by weight of polymethyl methacrylate (index of refraction: 1.49, manufactured by Mitsubishi Rayon Co. Ltd., BR 88) and 50 parts by weight of styrene-acrylonitrile copolymer (index of refraction: 1.55, manufactured by Daicel Chemical Industries, Ltd., 080SF). The resultant solution was flow-cast on a polyethersulfone (PES) sheet (thickness: 100 μm, manufactured by Sumitomo Chemical Co. Ltd.) as a base sheet 16c, and dried. The coated sheet was heat-treated at 230°C for 10 minutes, submerged in cold water for cooling, and dried sufficiently. The base obtained was examined using a transmission-type microscope, and it was found that a layer 3c made of methyl polymethacrylate and styrene-acrylonitrile copolymer had a bicontinuous phase structure and that the average phase or domain distance of each continuous phase was about 6 μm. The base had a thickness of 115 μm, a total light transmittance of 93%, a haze value of 25%, and a reflectance of 4%, and was capable of directing scattering light at a scattering angle of about 7°.

As in Example 1, a substrate 5e was obtained by laminating the other side of the base sheet 16c of the base with a transparent conductive layer. The total light transmittance of the substrate 5e thus obtained was 92%, and the haze value thereof was 25%.

Using two substrates, a resistant layer-type analog touch panel 1d was fabricated in the same manner as in Example 1.

As in the case of the touch panel of Example 1, the degree of mirror-reflection was low and the touch panel 1d had high image visibility (sharpness, contrast, and definition of images).

Example 4

The touch panel 1e of Figure 7 was fabricated as follows.

90 parts by weight of a polyester-series resin (amorphous copolyester PET-G, manufactured by Eastman Chemical Company, Eastar PETG6763, index of refraction: 1.567) as a transparent base resin and 10 parts by weight of a general-purpose polystyrene-series resin (GPPS, manufactured by Daicel Chemical Industries, Ltd., GPPS#30, index of refraction: 1.589) as resin particulates were individually dried at 70°C for about 4 hours. Then, the resins were kneaded by a banbury mixer. The resin composition kneaded was shaped into a sheet in accordance with a film formation process, wherein the resin composition was melted at about 240°C and the molten composition was extrusion-molded into a sheet using a T-die, and the resultant sheet was solidified by a cooling drum having a surface temperature of about 25°C. The light-scattering sheet 18a having a particulates-dispersed structure thus obtained had a thikness of 120 μm, a total light transmittance of 91%, a haze value of 26%, and a reflectance of 5%.

On the light-scattering sheet was applied a vinyl acetate-based adhesive 17a and dried. The touch panel 1e was fabricated by adhering the light-scattering sheet to, via the adhesive layer, each of the front base and the back base of the touch panel of Comparative Example 1.

As in the case of the touch panel of Example 1, the degree of mirror-reflection was low and the touch panel 1e had high image visibility (sharpness, contrast, and definition of images).

Example 5

The touch panel 1f shown in Figure 8 was fabricated as follows.

As in Example 4, a light-scattering sheet (a light-scattering layer 3e in the form of a sheet) was made, and one side of which was laminated with a hard layer 7b. The laminated sheet had a thickness of 130 μm, a total light transmittance of 91%, a haze value of 26%, and a reflectance of 6%. A substrate 5i was fabricated by laminating the other side of the laminated sheet with an ITO transparent conductive layer 4a.

Except for the absence of the hard layer 7b, a substrate 5f was made in the same manner as that described above.

With the hard layer-laminated substrate 5e as the front substrate and the substrate 5f having no hard layer as the back substrate, the touch panel 1f was fabricated in the same manner as in Example 1.

Data were input through the front surface (input screen) of the touch panel with a pen (the input screen was depressed), but the front surface was not damaged. In addition, the scratch resistance of the front surface was evaluated through a key-stroke life test, but the front surface was hardly scratched.

As in the case of the touch panel of Example 1, the degree of mirror-reflection was low and the touch panel 1f had high image visibility (sharpness, contrast, and definition of images).

Comparative Example 2

The touch panel 1g shown in Figure 9 was fabricated as follows.

One side of the base sheet 16a of Comparative Example 1 was laminated with a hard layer 7c containing $SiO_2$-series (siloide-series) particulates to constitute a non-glare hard coat sheet. The laminated sheet had a total light transmittance of 77%, a haze value of 88%, and a reflectance of 15%. A substrate 5k was made by, as in Example 1, laminating the other side of the base sheet (not on the surface laminated with the hard layer 7c but on the other surface) with an ITO transparent conductive layer 4a.

The touch panel 1g was fabricated using the substrate 5k having a hard layer as the front substrate and the substrate 5d of Comparative Example 1 having no hard layer 1 as the back substrate.

The touch panel 1g was examined under a fluorescent lamp, and it was found that the amount of mirror-reflected light was lower. However, the visibility of an image observed through the touch panel 1a mounted on an image forming surface was found to be remarkably degraded, and it was hard to recognize the image.

Example 6

The liquid crystal display device of Figure 10 was fabricated by adhering the touch panel of Example 1 to the outer surface of a polarizing plate of a reflection-type liquid crystal display unit (STN-type) 2a and then forming a hard layer on the front surface of the touch panel.

In further detail, in the reflection-type liquid crystal display unit 2a, a transparent front base 8 one side of which is provided with a transparent conductive layer (transparent conductive electrode) 4c, and a back base 10 provided with a light-reflective conductive layer (light-reflective electrode) 9 are arranged such that the conductive layers (electrodes) 4c and 9 are in face-to-face relation. Between the bases 8 and 10 is present a liquid crystal cell 12 in which a liquid crystal 11 is confined. The other side of the front base 8 (not the surface provided with the conductive layer but the other one) is laminated with a light-scattering plate 15, and a polarizing plate 13 is laminated on the light-scattering plate 15 via a phase-contrast plate 14.

The constitutive members of the reflection-type liquid crystal display device were those listed below.

Polarizing plate 13: polarizing film for liquid crystal display (NPF) (manufactured by Nitto Denko Corporation)
Phase-contrast plate 14: phase-contrast film for liquid crystal display (NRF) (manufactured by Nitto Denko Corporation)
Front base: glass base (thickness: 0.7 mm)
Back base: glass base (thickness: 0.7 mm)
Transparent conductive layer 4c: ITO transparent conductive layer patterned by photolithography
Reflective conductive layer 9: aluminium layer (formed by depositing aluminium on a glass base) patterned by photolithography
Alignment film: polyimide-series alignment film
Liquid crystal 11: nematic liquid crystal ZLI-4750 having a negative dielectric anisotropy (n-type) (thickness of liquid crystal layer: 7 μm)

The touch panel and the liquid crystal display 2a were bonded together at the interface of the polarizing plate and the touch panel with a double-stick tape applied along its margin.

This touch panel-equipped reflection-type liquid crystal display device was allowed to display an image under a fluorescent lamp. Compared to the case with no touch panel, the degree of mirror-reflection was lower, and the image quality and brightness of the device were almost the same. The image displayed on the touch panel was vivid.

Comparative Example 3

Except that the touch panel of Comparative Example 2 was used, the reflection-type liquid crystal display device of Figure 11 was fabricated in the same manner as in Example 6.

This touch panel-equipped reflection-type liquid crystal display device was allowed to display an image under a fluorescent lamp. So that light from the fluorescent lamp was mirror-reflected and the display screen dazzled (glare), it was hard to recognize the image.

Example 7

The liquid crystal display device of Figure 12 was fabricated in the same manner as in Example 6, with the exception that the liquid crystal display unit was one with no light-scattering plate.

This touch panel-equipped reflection-type liquid crystal display device was allowed to display an image under a fluorescent lamp and, as in the case of the touch panel of Example 6, found to have high visibility. So that a hard layer was formed on the front surface of the liquid crystal display device, as in the case of the touch panel of Example 6, the touch panel of Example 7 had high scratch resistance. In addition, even if used for a long period of time, the image quality was not degraded.

Example 8

The touch panel shown in Figure 16 was fabricated. The constitutive members (elements) used were those listed below.

Bases 16e and 16f: polyethersulfone film (PES, manufactured by Sumitomo Bakelite Co. Ltd.)
Spacer 6: Epoxy-series resin (particle size: 200 µm)
Transparent conductive layers 4a and 4b: ITO (indium tin oxide) layer
Polarized light separation layer 33: cholesteric liquid crystal layer, trade name "NIPCOS' (manufactured by Nitto Denko Corporation)
Phase-contrast layer 34: phase-contrast film for liquid crystal display (NRF, manufactured by Nitto Denko Corporation)

This touch panel is excellent in visibility, for light reflected at an area posterior to the input screen of the touch panel (e.g., the interface between the transparent conductive layer and air) does not exit through the input screen.

Comparative Example 4

Except for the absence of the polarized light separation layer 33, the touch panel shown in Figure 19 was fabricated in the same manner as in Example 8.
This touch panel is poor in visibility, for light reflected at an area posterior to the input screen of the touch panel exits through the input screen and thus an image is displayed double.

Example 9

Except for the absence of the phase-contrast layer, a touch panel similar to that of Example 8 was fabricated (Figure 15).
Similar to the touch pane of Example 8, this touch panel is excellent in visibility.

Example 10

The touch panel shown in Figure 20 was fabricated by laminating the input screen of the touch panel of Example 8 with a light-scattering sheet 3. The light-scattering sheet was made in the following manner; 50 parts by weight of methyl polymethacrylate having an index of refraction of 1.49 (BR 88, manufactured by Mitsubishi Rayon Co. Ltd.) and 50 parts by weight of styrene-acrylonitrile copolymer having an index of refraction of 1.55 (080SF. manufactured by Daicel Chemical Industries, Ltd.) were dissolved in a mixed solvent of methylene chloride and methanol (methylene chloride/methanol = 90/10 (weight ratio)). The solution was flow-cast on a polyethersulfone (PES) sheet of 100 µm thick (manufactured by Sumitomo Chemical Co. Ltd.) and dried. The sheet was made into a light-scattering sheet (thickness: 115 µm, total light transmittance: 93%, haze value: 25%, reflectance: 4%) by heat-treatment at 230°C for 10 minutes and submersion in cold water followed by sufficient drying. Examined with a transmission-type microscope, the coating layer of the light-scattering sheet was found have a bicontinuous phase structure and an average phase distance of each phase of about 6 µm.

Example 11

The liquid crystal display device shown in Figure 21 was fabricated placing (adhering) the touch panel of Example 8 on (the front surface of) a liquid crystal display unit with a single polarizing plate. The constitutive members of the liquid crystal display unit are those listed below.

Polarizing plate 13: polarizing film for liquid crystal display (NPF) (manufactured by Nitto Denko Corporation)
Phase-contrast plate 14: phase-contrast film for liquid crystal display (NRF) (manufactured by Nitto Denko Corporation)

Light-scattering plate 15: a sheet comprised of 100 parts by weight of a transparent base resin (PETG, manufactured by Eastman Chemical Company, index of refraction: 1.567) within which 15 parts by weight of a resin in the form of particulates is dispersed (crosslinked PS particulates, manufactured by Sekisui Plastics Co. Ltd. index of refraction: 1.59, mean particle size: 8 μm).

Bases 8 and 10: glass base (thickness: 0.7 mm)

Transparent conductive layer 15: ITO transparent conductive layer patterned by photolithography

Reflective conductive layer 9: aluminium layer (formed by depositing aluminium on a glass base) patterned by photolithography

Alignment film: polyimide-series alignment film

Liquid crystal 11: nematic liquic crystal ZL1-4750 having a negative dielectric anisotropy (n-type) (thickness of liquid crystal layer: 7 μm)

The touch panel 1j and the liquid crystal display 2e were bonded together at the interface between the phase-contrast layer 34 of the touch panel and the polarizing plate 13 of the liquid crystal display unit 2e with a double-stick tape applied to its margin.

Although the liquid crystal display device of Example 11 incorporates the touch panel, double or multiple imaging is inhibited. In addition, the display screen of the device is bright and the visibility is excellent, for light entered the touch panel through its input screen passes through the liquid crystal layer at a high rate.

Comparative Example 5

The liquid crystal display device shown in Figure 22 was fabricated in the same manner as in Example 11 with the exception that the touch panel incorporated therein was the touch panel 1k of Comparative Example 4.

The liquid crystal display device is poor in visibility, for light entered the touch panel 1k through its input screen is reflected at numbers of interfaces and exits through the input screen, making an image displayed seem double. Moreover, the amount of light entered touch panel is cut in nearly half by the polarizing plate 13, and part of the light transmitted through the polarizing plate 13 is reflected before reaching the liquid crystal layer, and exits the touch panel through its input screen. Therefore, the liquid crystal display screen seems dark.

Example 12

The liquid crystal display device shown in Figure 17 was fabricated using the touch panel 1i of Example 9. The constitutive members of its liquid crystal display unit were similar to those used in Example 11.

This liquid crystal display device is, though equipped with a touch panel on its front surface as in the case of the liquid crystal display device of Example 11, excellent in visibility.

Example 13

The liquid crystal display device shown in Figure 23 was fabricated by mounting the touch panel 1m of Example 10 on the front surface of a liquid crystal display unit 2d similar to that of Example 11, with the exception that the unit 2d was not provided with a light-scattering sheet.

Since light to be reflected at the input screen of the touch panel is suitably scattered, this liquid crystal display device is remarkably excellent in visibility. In addition, there is not need for the liquid crystal display unit to be provided with a light-scattering sheet.

**Claims**

1.  A touch panel comprising a pair of substrates each composed of at least a transparent conductive layer and a base and arranged such that the substrates are spaced apart and the transparent conductive layers face each others which has at least one feature selected from:

    (1) at least one of the substrates is light-scatterable; and
    (2) a polarized light separation layer capable of transmitting certain circularly polarized light is provided in front of the transparent conductive layer of the substrate for touch input.

2.  A touch panel according to claim 1, wherein the substrate has a light-scattering layer.

3.  A touch panel according to claim 1, wherein the base is solely constituted of a light-scattering layer, or a laminate of a light-scattering layer and a base sheet.

4.  A touch panel according to claim 1, wherein the base is laminated with a sheet having a light-scattering layer.

5.  A touch panel according to claim 1, wherein a light-scattering layer is formed on the base of the input-side substrate or the polarized light separation layer.

6.  A touch panel according to claim 5, wherein the light-scattering layer is positioned in front of the polarized light separation layer.

7.  A touch panel according to claim 1, wherein the light-scattering substrate is capable of directing scattering light at a scattering angle of 3 to 60°.

8.  A touch panel according to claim 1, wherein a phase-contrast layer is provided on an element or member posterior to the polarized light separation layer.

9.  A touch panel according to claim 8, wherein the phase-contrast layer is formed on an element or member posterior to the transparent conductive layer of the opposite substrate.

10. A touch panel according to claim 8, wherein the phase-contrast layer comprises a laminate of a layer producing a phase difference of 100 to 200 nm and a layer producing a phase difference of 200 to 400 nm.

11. A touch panel according to claim 1, wherein the polarized light separation layer comprises a cholesteric liquid crystal phase and is capable of selectively reflecting circularly polarized light of wavelength 300 to 900 nm.

12. A touch panel according to claim 2, wherein the light-scattering layer comprises a plurality of components having different indexes of refraction, and at least one of which is a resin.

13. A touch panel according to claim 12, wherein the light-scattering layer comprises a plurality of components different in index of refraction by 0.01 to 0.2.

14. A touch panel according to claim 12, wherein the light-scattering layer has a phase-separated structure.

15. A touch panel according to claim 12, wherein the light-scattering layer has an isotropic bicontinuous phase structure.

16. A touch panel according to claim 12, wherein the light-scattering layer has a particulates-dispersed structure in which a particulate component is dispersed in a transparent base resin, the particulate component being at least one member selected from resin particualtes and inorganic particulates and having an index of refraction different from that of the transparent base resin.

17. A touch panel according to claim 16, wherein the particulates-dispersed structure is formed by forming a molten thermoplastic transparent base resin containing the particulate component into a film.

18. A touch panel according to claim 1, wherein the front surface of the substrate for touch input is provided with a scratch-resistant layer.

19. A touch panel according to claim 1, wherein each substrate is provided with busbars connecting to each transparent conductive layer, and the set of busbars on one substrate and that of the other substrate are nearly in orthogonal relation.

20. A liquid crystal display device, which comprises a liquid crystal display unit and the touch panel recited in claim 1, wherein the touch panel is mounted on the front surface of the liquid crystal display unit.

21. A liquid crystal display device according to claim 20, wherein a polarizing plate is provided on the front surface of the liquid crystal display unit via a phase-contrast plate, and the touch panel recited in claim 8 is mounted on the polarizing plate.

**22.** A liquid crystal display device according to claim 20, wherein the liquid crystal display unit is a reflection-mode liquid crystal display unit or a reflection-transmission-mode liquid crystal display unit.

**23.** A liquid crystal display device according to claim 22, which comprises a light source for illuminating the front surface of the liquid crystal display device.

**24.** A liquid crystal display device according to claim 20, wherein the liquid crystal display unit has mirror-reflecting properties.

F I G. 1

DETECTOR

θ

22

21
29
28
23
25

F I G. 2

7
5A
3A
4A
1
6
4B
5B
3B

13
14
8
4c
11
9
10

2

12

F I G. 3

F I G. 4

F I G. 5

F I G. 6

F I G. 7

F I G. 8

F I G. 9

FIG. 10

FIG. 11

F I G. 1 2

F I G. 1 3

F I G. 1 4

F I G. 1 5

F I G. 1 6

FIG. 17

FIG. 18

F I G. 1 9

F I G. 2 0

F I G. 2 1

FIG. 22

FIG. 23